# EUROPÄISCHE PATENTSCHRIFT

(11) **EP 4 278 239 B1**
(45) Veröffentlichungstag und Bekanntmachung des Hinweises auf die Patenterteilung: **18.06.2025**
(21) Anmeldenummer: 22702875.0
(22) Anmeldetag: 14.01.2022
(51) Int. Cl.: G05D 1/00, G06Q 10/08, G05B 19/042, B07C 3/02, B07C 5/36

(54) **SORTIERSYSTEM UND VERFAHREN ZUM STEUERN EINES SORTIERSYSTEMS**
SORTING SYSTEM AND METHOD FOR CONTROLLING A SORTING SYSTEM
SYSTÈME DE TRI ET PROCÉDÉ DE COMMANDE D'UN SYSTÈME DE TRI

(30) Priorität: 15.01.2021 DE 102021200339
(43) Veröffentlichungstag der Anmeldung: 22.11.2023
(73) Patentinhaber: Fraunhofer-Gesellschaft zur Förderung der angewandten Forschung e.V., 80686 München (DE)
(72) Erfinder: BEHLING, Jan, 44227 Dortmund (DE); ROTGERI, Mathias, 44227 Dortmund (DE); EMMERICH, Jan Sören, 44227 Dortmund (DE); HÖNING, Dirk, 44227 Dortmund (DE); KLOKOWSKI, Patrick, 44227 Dortmund (DE); HAMMERMEISTER, Christian, 44227 Dortmund (DE); TEN HOMPEL, Michael, 44227 Dortmund (DE)
(74) Vertreter: König, Andreas Rudolf
(86) Internationale Anmeldenummer: PCT/EP2022/050711
(87) Internationale Veröffentlichungsnummer: WO 2022/152825

(56) Entgegenhaltungen:
- EP-A1- 3 690 775
- EP-A1- 3 722 909
- WO-A1-2020/064305
- CN-U- 208 018 986

## Beschreibung

Die vorliegende Erfindung bezieht sich auf ein Sortiersystem und auf ein Verfahren, gegebenenfalls computerunterstützt ausgeführt, zum Steuern eines solchen Sortiersystems. Die vorliegende Erfindung bezieht sich insbesondere auf ein infrastrukturreduziertes Sortiersystem mit Fahrzeugen.

Bei der Sortierung, Verteilung und/oder Auslieferung von Sortiergütern oder Lastgütern kann eine Anforderung darin bestehen, diese Sortiergüter von einer Position zu einer anderen zu transportieren. Hierzu sind manuelle, maschinenunterstützte oder gar teilautomatisierte oder vollautomatisierte Vorgänge vorstellbar. In den meisten Fällen trifft Sortiergut in Sortiersystemen in gestapelt oder geschütteter Form ein, z. B. in Rollwagen oder Containern. Diese werden in aller Regel manuell entnommen und einzeln auf ein Förderband gelegt. Teilweise werden auch automatische Vorrichtungen verwendet, in die das Sortiergut als Haufwerk hineingefördert wird. Diese erfordern jedoch eine gewisse Fläche und sind relativ kostenintensiv.

Nachdem die Vereinzelung (das heißt, eine Herstellung von einem Abstand zwischen den einzelnen Paketstücken) erfolgt ist, wird das Sortiergut dem eigentlichen Sorter (Sortierer) zugeführt. Eingesetzt werden zur automatischen Sortierung fest installierte linienförmige oder ringförmige Sortieranlagen. Diese besitzen beispielsweise eine Vielzahl von Klappschalen oder quer zur Förderrichtung angetriebene Fördergurte, auf die an einer zentralen Einschleusung die zuvor vereinzelten Sortiergüter mit relativ hoher Geschwindigkeit abgegeben werden.

In der Regel ist der Sorter aufgeständert. Auf den beispielhaften Klappschalen wird das Sortiergut anschließend an den meist beidseitig angeordneten und in großer Anzahl vorhandenen Endstellen entlang gefördert. An der dem Sortiergut zugeordneten Endstelle wird das Sortiergut seitlich abgegeben. Die Endstelle ist meist rutschenartig ausgeführt, um durch Gravitation das Ende der Endstelle zu erreichen und eine gewisse Pufferkapazität zu realisieren. Hierzu ist die Aufständerung des Sorters vorteilhaft. Aus den Endstellen wird das Sortiergut dann in aller Regel manuell entnommen und z. B. in einen Rollwagen oder Container, ggf. mittels zusätzlicher mechanischer Unterstützung, verbracht.

Darüber hinaus sind vereinzelt auch Sortiersysteme mit automatischen Fahrzeugen bekannt. Alle bisher bekannten Systeme teilen die Eigenschaft, dass die eingesetzten Fahrzeuge über ein aktives Lastaufnahmemittel, konkret eine einseitig klappbare Schale verfügen oder einen in beide Richtungen antreibbaren Fördergurt aufweisen. Die Fahrwege im Sortiersystem sind entweder rasterförmig gestaltet, beispielsweise eine Mehrzahl, die alle für Paketsendungen eingerichtet sind, oder in Form eines Kreises, ggf. mit Nebenkreisen, etwa zum Transport von Koffern.

EP 3 690 775 A1 bezieht sich auf ein System zum Sortieren von Objekten unter Verwendung von Transportvorrichtungen.

CN 208 018 986 U bezieht sich auf die Bereitstellung eines Non-Stopp-Sortierroboters, der einen Zeitpunkt des Starts der Auslieferung bestimmt und dann das Paket heruntergleiten lässt, indem die Abgabe gekippt wird. Ziel ist es, ein Anhalten des Roboters zu vermeiden.

Nachteilig an den bekannten Sortiersystemen ist die komplexe Einrichtung solcher Fahrwege beziehungsweise der verwendeten Infrastruktur.

Es besteht deshalb ein Bedarf an einem flexiblen Sortiersystem und an einem Verfahren zum Steuern eines solchen Sortiersystems.

Eine Aufgabe der vorliegenden Erfindung besteht deshalb darin, ein Sortiersystem zu schaffen, das flexibel eingerichtet werden kann und ferner, ein Verfahren bereitzustellen, um ein solches Sortiersystem zu steuern.

Diese Aufgabe wird durch den Gegenstand der unabhängigen Patentansprüche gelöst.

Gemäß einem Ausführungsbeispiel umfasst ein Sortiersystem eine erste Anzahl von Einschleusepunkten, die eingerichtet sind, um Sortiergüter bereitzustellen, eine zweite Anzahl von Endstellen, die ausgebildet sind, um die Sortiergüter zu empfangen, und eine dritte Anzahl von fahrerlosen Sortierfahrzeugen, die ausgebildet sind, um die Sortiergüter zwischen der ersten Anzahl von Einschleusepunkten und der zweiten Anzahl von Endstellen zu transportieren. Ferner ist eine Steuerungseinrichtung vorgesehen, die ausgebildet ist, um die fahrerlosen Sortierfahrzeuge zwischen der ersten Anzahl von Einschleusepunkten und der zweiten Anzahl von Endstellen zu steuern.Zumindest ein fahrerloses Sortierfahrzeug ist ausgebildet, um basierend auf einer Veränderung eines Vektors der Geschwindigkeit des fahrerlosen Sortierfahrzeugs das Sortiergut unter Verwendung einer durch eine Fahrtbewegung des fahrerlosen Sortierfahrzeugs bereitgestellten kinetischen Energie des Sortierguts abzugeben.

Gemäß einem Ausführungsbeispiel umfasst ein Verfahren zum Steuern eines Sortiersystems ein Steuern von fahrerlosen Sortierfahrzeugen zwischen einer ersten Anzahl von Einschleusepunkten und einer zweiten Anzahl von Endstellen, um an der ersten Anzahl von Einschleusepunkten Sortiergüter bereitzustellen, an der zweiten Anzahl von Endstellen die Sortiergüter zu empfangen, indem mit einer dritten Anzahl von fahrerlosen Sortierfahrzeugen die Sortiergüter zwischen der ersten Anzahl von Einschleusepunkten und der zweiten Anzahl von Endstellen transportiert werden. Das Verfahren wird so ausgeführt, dass zumindest ein fahrerloses Sortierfahrzeug basierend auf einer Veränderung eines Vektors der Geschwindigkeit des fahrerlosen Sortierfahrzeugs das Sortiergut unter Verwendung einer durch eine Fahrtbewegung des fahrerlosen Sortierfahrzeugs bereitgestellten kinetischen Energie des Sortierguts abgibt.

Ein weiteres Ausführungsbeispiel schafft ein Computerprogrammprodukt mit einem Programmcode zur Ausführung eines solchen Verfahrens.

Weitere vorteilhafte Ausführungsformen sind der Gegenstand abhängiger Patentansprüche.

Unter Bezugnahme auf die beiliegenden Zeichnungen werden nachfolgend besonders bevorzugte Ausführungsformen näher erläutert. Dabei zeigen:
- Fig. 1a: ein schematisches Blockschaltbild eines Sortiersystems gemäß einem Ausführungsbeispiel;
- Fig. 1b: ein schematisches Blockschaltbild eines gegenüber dem Sortiersystem aus Fig. 1a veränderten Sortiersystems gemäß einem Ausführungsbeispiel;
- Fig. 2: eine schematische perspektivische Ansicht einer Sortiergutübernahmestation gemäß einem Ausführungsbeispiel;
- Fig. 3: eine schematische perspektivische Ansicht einer alternativen Lagegutübernahmestation gemäß einem Ausführungsbeispiel;
- Fig. 4a: eine schematische perspektivische Ansicht eines Sortierfahrzeugs gemäß einem Ausführungsbeispiel, das sich benachbart zu einem Werkzeug in dem Sortiersystem aufhalten kann;
- Fig. 4b: einen Zustand des Fahrzeugs aus Fig. 4a, das gemäß einem Ausführungsbeispiel mit dem Werkzeug gekoppelt ist;
- Fig. 5: eine schematische perspektivische Ansicht einer möglichen Implementierung eines oder mehrerer Sortierfahrzeuge gemäß einem Ausführungsbeispiel mit einem omnidirektionalen Fahrwerk;
- Fig. 6: eine schematische perspektivische Ansicht eines Sortierfahrzeugs gemäß einem Ausführungsbeispiel mit Klappschale;
- Fig. 7: eine zu Fig. 6 korrespondierende Darstellung, bei der zusätzlich gemäß einem Ausführungsbeispiel eine Federbeaufschlagung vermittels einem oder mehrerer Federelemente eingerichtet ist;
- Fig. 8a: eine schematische perspektivische Darstellung eines Zustands während einer Annäherung eines Sortierfahrzeugs gemäß einem Ausführungsbeispiel an die Sortiergutübernahmestation aus Fig. 2;
- Fig. 8b: eine schematische Darstellung einer auf Fig. 8a aufbauenden Situation, bei der das Sortierfahrzeug an die Sortiergutübernahmestation herangefahren ist und gemäß einem Ausführungsbeispiel abbremst;
- Fig. 9a-d: schematische Darstellungen zur zusätzlichen Erläuterung zur Ausnutzung einer Massenträgheit des Sortierguts gemäß Ausführungsbeispielen;
- Fig. 10a: ein schematisches Blockschaltbild eines Sortierfahrzeugs gemäß einem Ausführungsbeispiel, das ein omnidirektionales Antriebssystem umfasst, das ausgebildet ist, um eine Bewegung des Fahrzeugs bereitzustellen;
- Fig. 10b: ein schematisches Blockdiagramm einer omnidirektionalen Antriebseinrichtung des Sortierfahrzeugs, mit einer dezentralen Berechnungseinrichtung gemäß einem Ausführungsbeispiel;
- Fig. 11a: eine schematische Draufsicht auf ein Sortierfahrzeug gemäß einem Ausführungsbeispiel im Zusammenhang mit der individuellen Ansteuerung unterschiedlicher Antriebseinrichtungen gemäß einem Ausführungsbeispiel;
- Fig. 11b: eine mögliche Wirkung der hierin beschriebenen Ausführungsbeispiele aus Fig. 11a zur Korrektur einer dort auftretenden Abweichung gemäß einem Ausführungsbeispiel;
- Fig. 12: eine schematische Seitenschnittansicht eines Sortierfahrzeugs gemäß einem Ausführungsbeispiel, ausgebildet ist, um mittels einer Erfassungseinheit eine Bodenbeschaffenheit der Oberfläche zu erfassen, um eine Lokalisierung des Fahrzeugs auszuführen;
- Fig. 13: eine schematische Darstellung eines Sortiersystems gemäß einem Ausführungsbeispiel im Zusammenhang mit einer Wahl von Trajektorien für die Sortierfahrzeuge;
- Fig. 14: eine schematische Blockdarstellung eines Teils eines Sortiersystems gemäß einem Ausführungsbeispiel, mit einer optionalen Identifikationseinrichtung;
- Fig. 15: eine schematische perspektivische Ansicht eines kamm-artig gebildeten Einschleusepunktes gemäß einem Ausführungsbeispiel;
- Fig. 16: eine schematische Draufsicht auf zwei miteinander gekoppelte Sortierfahrzeuge gemäß einem Ausführungsbeispiel;
- Fig. 17: eine schematische Draufsicht auf zwei nicht miteinander gekoppelte Sortierfahrzeuge zum gemeinsamen Sortierguttransport gemäß einem Ausführungsbeispiel; und
- Fig. 18: ein schematisches Blockschaltbild einer Anordnung aus Sortierfahrzeug und eines hiermit mittels einer Kopplung gekoppelten Anhängers eine schematische Draufsicht auf zwei miteinander gekoppelte Sortierfahrzeuge gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres miteinander kombiniert werden, solange es nicht explizit gegenteilig beschrieben ist.

Hierin beschriebene Ausführungsbeispiele beziehen sich auf ein Sortiersystem sowie auf ein korrespondierendes Verfahren. Anders als bekannte Sortiersysteme, bei denen beispielsweise wie aus Kippschalensortern oder einem Förderbandsorter die Verteilung von Sortiergütern oder Laststücken auf vordefinierten, mechanisch eingerichteten ring- oder linienförmigen Wegen erfolgt und/oder anders als bei automatischen Fahrzeugen, bei denen eine feste Rasterung der Wege erfolgt, auf denen sich dann Fahrzeuge bewegen können, ist eine Steuerungseinrichtung im Zusammenhang mit hierin beschriebenen Sortiersystemen derart ausgestaltet, dass Routen von Fahrzeugen dynamisch veränderlich sein können, etwa sollte dies aufgrund veränderlicher Anordnungen einzelner Objekte in dem Sortiersystem erforderlich sein und/oder indem eine Fahrzeuge von Fahrzeugen in dem Sortiersystem veränderlich ist. Eine derartige Steuerungseinrichtung kann dabei zentral angeordnet sein und beispielsweise vermittels drahtloser Kommunikation, wie beispielsweise Bluetooth, WLAN, 4G, 5G oder dergleichen, oder auf anderer Weise mit den Fahrzeugen kommunizieren. Alternativ oder zusätzlich kann eine Steuerungseinrichtung auch ganz oder teilweise verteilt in den Fahrzeugen implementiert sein, so dass eine entsprechende Route und/oder ein Fahrverhalten lokal bestimmt wird.

Während in bekannten Sortiersystemen, beispielweise wie für den Kippschalensorter beschriebene Ausgestaltungen mit fester Infrastruktur, Hindernisse von den Kippschalen entlang der vordefinierten, mechanisch eingerichteten Wege nicht erwartet werden, so dass es auch nicht auf solche Hindernisse reagieren müsste, sind andere bekannte Systeme mit automatischen Fahrzeugen dergestalt ausgelegt, um auf ein plötzliches Hindernis auf den fest vorgegebenen Routen reagieren zu können, etwa indem die Fahrt gestoppt, verlangsamt oder abgebrochen wird, oder indem ausgewichen wird. Ein Beispiel für ein solches Szenario ist ein Hindernis, beispielsweise ein Objekt oder ein Mensch, das in den Fahrtweg kommt.

Ausführungsbeispiele sind auch darauf gerichtet, Fahrzeuge mit vergleichsweise hohen Geschwindigkeiten zu bewegen, was ein Ausweichen oder Stoppen des Fahrzeugs vor einer Kollision erschwert oder gar unmöglich macht, etwa aufgrund von physikalischen Randbedingungen wie der Massenträgheit. Ausführungsbeispiele sind insofern darauf gerichtet, eine dynamische Routenplanung vorzunehmen, die Kollisionen bereits vorab erkennt und die Route entsprechend plant, um das Erfordernis eines plötzlichen Ausweichens oder Abbremsen zu vermeiden.

Ausführungsbeispiele beziehen sich auf ein Sortiersystem, das Einschleusepunkte oder Einschleuseorte aufweist und das Endstellen aufweist. Als Endstelle kann eine Stelle in dem Sortiersystem verstanden werden, an welcher das Sortiergut aus dem Sortiersystem wieder herausgenommen oder entfernt wird, es kann sich aber auch um eine Übergabestelle handeln, von der aus nach erfolgtem ersten Teiltransport durch erneute Aufnahme des Sortierguts mit einem Sortierfahrzeug ein weiter Teiltransport an eine weitere Endstelle oder Übergabestation erfolgt, weswegen eine Endstelle in manchen Ausführungen synonym als Übergabestation dienen kann und/oder eine Übergabestation als Endstelle für einen Teiltransport betrachtet werden kann. Beide Einrichtungen, die Endstelle und die Übergabestationen, können als Sortiergutübernahmestation verstanden werden. Gleichwohl kann eine derartige Sortiergutübernahmestation auch als Einschleusepunkt verstanden werden, indem das Sortiergut erneut für eine Fahrt bereitgestellt wird.

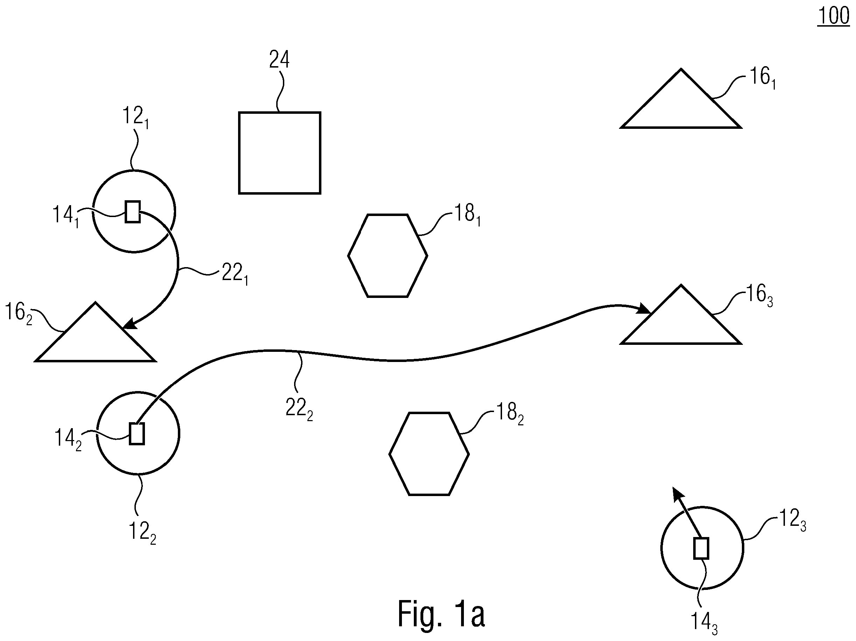

Fig. 1a zeigt in diesem Zusammenhang ein schematisches Blockschaltbild eines Sortiersystems 100 gemäß einem Ausführungsbeispiel. Das Sortiersystem 100 umfasst eine erste Anzahl von Einschleusepunkten 12₁ bis 12₃, die eingerichtet sind, um Sortiergüter 14₁ bis 14₃ bereitzustellen, das heißt, in das Sortiersystem einzubringen, weiter zu verteilen und/oder für einen Transport zur Verfügung zu stellen.

Das Sortiersystem umfasst ferner eine gleiche oder verschiedene Anzahl von Endstellen 16₁ bis 16₃, die ausgebildet sind, um die Sortiergüter 14₁ bis 14₃ zu empfangen.

Ferner umfasst das Sortiersystem 100 eine von der Anzahl von Einschleusepunkten 12 und/oder der Anzahl von Endstellen 16 gleiche oder verschiedene Anzahl von fahrerlosen Sortierfahrzeugen 18₁ und 18₂, die ausgebildet sind, um die Sortiergüter 14₁ bis 14₃ zwischen den Einschleusepunkten 12₁ bis 12₃ und den Endstellen 16₁ bis 16₃ zu transportieren. Hierzu kann beispielsweise jeweils zumindest eines der Sortierfahrzeuge 18 zumindest ein Sortiergut 14 gemäß einem Fahrtauftrag entlang einer Route oder Trajektorie 22₁ oder 22₂ transportieren, wobei der Begriff Route oder Trajektorie einen ganz oder teilweisen geraden Verlauf der zurückgelegten Strecke alternativ oder in Kombination zu einem zumindest abschnittsweisen gekrümmten Verlauf der Route bedeuten kann.

Das Sortiersystem 100 umfasst ferner eine Steuerungseinrichtung 24, die ausgebildet ist, um die fahrerlosen Sortierfahrzeuge 18₁ und/oder 18₂ zwischen den Einschleusepunkten 12 und den Endstellen 16 zu steuern.

Bevorzugt sind die fahrerlosen Sortierfahrzeuge mit einem omnidirektionalen Antriebssystem ausgestattet. Derartige Fahrzeuge können auch als holonomische Fahrzeuge bezeichnet werden. Das bedeutet, dass die Anzahl der steuerbaren Freiheitsgrade gleich der Anzahl an insgesamt im System vorhandenen Freiheitsgraden sein kann. Als holonomisches Fahrzeug beziehungsweise holonomischer Roboter kann eine Einrichtung verstanden werden, die in der Lage ist, jede beliebige Trajektorie im sogenannten Konfigurationsraum (engl.: configuration space), das heißt effektiv der Raum, welcher aus den beispielhaft drei Freiheitsgraden mit den Positionen X, Y und der Rotation gebildet wird, zu durchfahren, solange die Randbedingung der Beschleunigung eingehalten wird. Im Gegensatz dazu stehen beispielsweise Fahrzeuge, wie ein Automobil, welches normalerweise nicht in der Lage ist, seitlich in eine Parklücke zu fahren. Für ein solches Einparken müssen verhältnismäßig komplizierte Trajektorien gewählt werden, um das Fahrzeug 2 Meter seitlich zu bewegen, beispielsweise, da das Automobil nur zwei steuerbare Freiheitsgrade aufweist. Hierzu wird angenommen, dass Systeme von auf dem Boden fahrenden Fahrzeugen insgesamt drei Freiheitsgrade aufweisen, eben die beiden für die Positionen X und Y und einen für die Rotation.

Für die Implementierung einer sogenannten omnidirektionalen Antriebseinrichtung sind mehrere Konzepte möglich, wobei Ausführungsbeispiele insbesondere auf Fahrzeuge gerichtet sind, deren Antriebseinrichtungen Allseitenräder (engl.: omniwheels) und/oder sogenannte Mecanumräder umfassen, die gute Eigenschaften für die Bewegung eines Fahrzeugs aufweisen. Ein Unterschied zwischen Allseitenrädern oder omniwheels und Mecanumrädern ist beispielsweise, dass Allseitenräder in Laufrichtung gesehen wenig oder keine Seitenkräfte aufnehmen können, Mecanumräder aber schon. Ungeachtet dessen können mit Mecanumrädern gleiche oder ähnliche Kinematiken realisiert werden, wie mit Allseitenrädern, was zu einer guten Verwendbarkeit beider Einrichtungen führt.

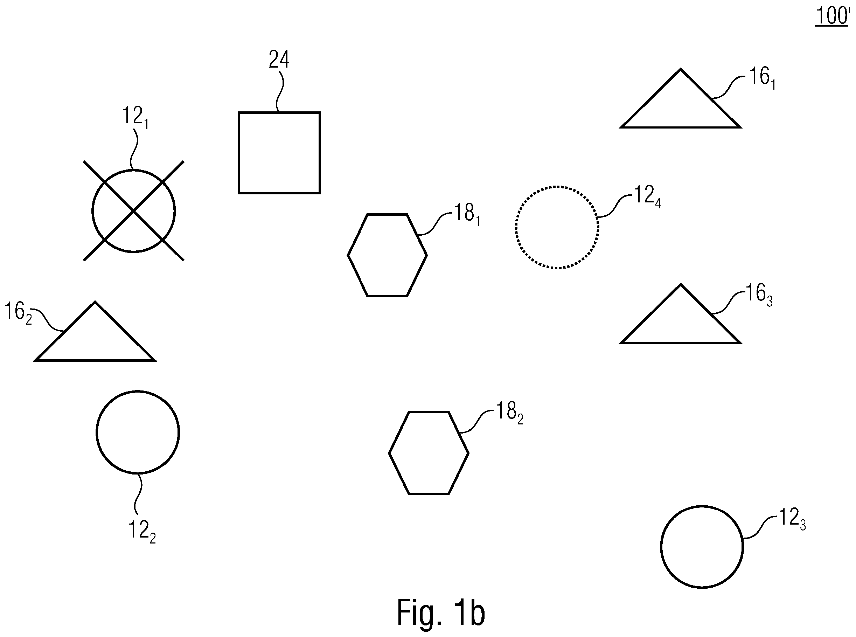

Fig. 1b zeigt ein schematisches Blockschaltbild eines gegenüber dem Sortiersystem 100 veränderten Sortiersystems 100', das aus der Konfiguration gemäß der Fig. 1a hervorgehen kann, beispielsweise, indem dem Sortiersystem 100 ein zusätzlicher Einschleusepunkt 12₄ hinzugefügt wird und/oder indem ein bestehender Einschleusepunkt, etwa der Einschleusepunkt 12₁, entfernt wird. Wie es nachfolgend noch detailliert beschrieben wird, kann an einem Einschleusepunkt 12 zwar eine gewisse Art von physikalischer Einrichtung vorgesehen oder implementiert werden, dies ist jedoch nicht notwendigerweise erforderlich, da ein Einschleusepunkt ebenso wie eine Endstelle bereits als eine definierte Fläche oder ein definierter Raum betrieben werden kann, von der Sortiergüter empfangen werden oder in welche/welchen Sortiergüter abgegeben werden. In einem Beispiel ist ein Einschleusepunkt und/oder eine Endstelle als mechanisch passives Gestell ausgestaltet, an der ein Sortierfahrzeug 18 ein transportiertes Sortiergut abstreifen kann und/oder von dieser aufnehmen kann. Durch Entfernen einer derartigen Vorrichtung kann eine Endstelle außer Betrieb gesetzt werden. Alternativ kann durch ein zusätzliches Aufstellen einer derartigen Einrichtung ein entsprechender Punkt im Sortiersystem zusätzlich in Betrieb genommen werden, wobei in beiden Fällen die Steuerungseinrichtung 24 ausgelegt ist, um die Steuerung des Sortiersystems entsprechend anzupassen, beispielsweise indem die Routen oder Trajektorien 22 angepasst werden. Kombinatorisch ist es beispielsweise auch möglich, den Einschleusepunkt 12₁ örtlich zu versetzen, um zum Einschleusepunkt 12₄ zu gelangen.

Die genannten Veränderungen können beispielsweise ad-hoc erfolgen, das bedeutet, im laufenden Betrieb. Eine entsprechende Signalisierung an die Steuerungseinrichtung 24 zum Anpassen der bestehenden Regelung kann ausreichend sein, um den Betrieb des Sortiersystems 100 beziehungsweise 100' ungestört fortzusetzen.

Die beschriebene Umgestaltung des Sortiersystems im Hinblick auf die Einschleusepunkte kann ohne Weiteres auch für die Endstellen 16 ausgeführt werden.

Das Sortiersystem 100 beziehungsweise das Sortiersystem 100' ermöglicht es beispielhaft, als dezentrales Sortiersystem betrieben zu werden, in dem die Einschleusepunkte 12 und/oder die Endstellen 16 dezentral in dem Sortiersystem angeordnet sein können. Als dezentrale Einschleusepunkte kann beispielsweise eine Konfiguration verstanden werden, bei der zumindest zwei Einschleusepunkte 12 so angeordnet sind, dass eine Distanz dazwischen größer ist, als zu einer jeweils naheliegendsten Endstelle. Dies kann komplementär auch für dezentrale Endstellen betrachtet werden.

Es sei an dieser Stelle ferner darauf hingewiesen, dass der Begriff des Einschleusepunktes beziehungsweise der Endstelle nicht notwendigerweise einen initialen Eintritt beziehungsweise endgültigen Austritt in das Sortiersystem beziehungsweise aus dem Sortiersystem bedeutet. Vielmehr kann eine Endstelle auch ausgelegt sein, um nach Empfang eines Sortierguts dieses weiterzugeben, beispielsweise an ein anderes Sortiergut. In gleichbedeutender Weise kann ein Einschleusepunkt 12 das Sortiergut auch bereits von einem Sortierfahrzeuge erhalten. Beispielhafte Implementierungen solcher Kombinationen sind beispielsweise Umladepunkte in einem Sortiersystem, etwa an Verbindungsstellen zweier Lagerhallen oder dergleichen.

Optional können in dem Sortiersystem 100 beziehungsweise 100' auch zusätzliche Einrichtungen angeordnet sein, beispielsweise Werkzeuge und/oder Einrichtungen zur Identifikation, das bedeutet, eine Identifikationseinrichtung. Eine solche Identifikationseinrichtung kann ausgebildet sein, um eine Identifikation eines Sortierfahrzeugs und/oder eines Sortierguts vorzunehmen. Beispielsweise kann eine Identifikationseinrichtung eine Kamera aufweisen, die ausgelegt ist, um Erkennungsmerkmale des zu erkennenden Objekts zu erfassen, beispielsweise eine Form, ein darin angeordnetes Muster oder dergleichen, oder andere Eigenschaften. Alternativ oder zusätzlich können auch andere Einrichtungen zur Identifikation vorgesehen sein, beispielsweise unter Verwendung von Funktechnologie, etwa vermittels RFID (radio-frequency identification, funkbasierte Identifikationen). Unabhängig voneinander können zumindest eines aus einer Anzahl oder Lage eines Einschleusepunktes 12, einer Endstelle 16 und/oder einer solchen Identifikationseinrichtung veränderlich sein. Die Steuerungseinrichtung 24 kann ausgebildet sein, um eine solche Veränderung zu berücksichtigen, beispielsweise bei der Routenplanung.

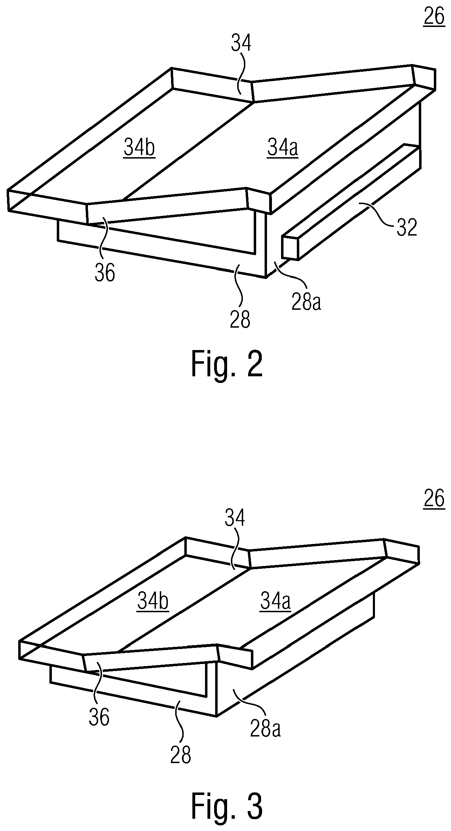

Fig. 2 zeigt eine schematische perspektivische Ansicht einer Sortiergutübernahmestation 26 gemäß einem Ausführungsbeispiel, die beispielsweise als Endstelle 16 und/oder zur Umsortierung oder erneuten Verteilung als Einschleusepunkt 12 eingesetzt werden kann. Die Sortiergutübernahmestation 26 kann eine Basis 28 aufweisen, die eine Vorderseite 12a umfasst, an welcher vorzugweise ein Stoßdämpfer- und/oder Federelement 32 (Bumper) angeordnet ist. Auf der beispielhaft aus einem Winkelprofil gebildeten Basis 28 der Sortiergutübernahmestation 26 ist ein Aufnahmebereich 34 angeordnet, der an der Vorderseite 28a der Basis 28 offen sein kann und ansonsten vorzugsweise Seitenränder 36 aufweisen kann, um den Bewegungsraum eines Sortierguts zu begrenzen. Im dargestellten Ausführungsbeispiel ist die Bodenfläche des Aufnahmebereichs 34 zunächst schräg abfallen, dieser Bereich ist mit 34a bezeichnet, der hintere Bereich ist beispielsweise waagrecht oder weniger schräg und mit 34b bezeichnet.

Fig. 3 zeigt eine schematische perspektivische Ansicht einer alternativen Sortiergutübernahmestation 26, die sich von derjenigen gemäß der Fig. 2 dadurch unterscheidet, dass kein Stoßdämpferelement und/oder Federelement 32 vorgesehen ist.

Die Sortiergutübernahmestation 26 illustriert lediglich eines der vorteilhaften Ausgestaltungen für einen Einschleusepunkt beziehungsweise eine Endstelle. So kann erkannt werden, dass im Aufnahmebereich 34a durch Heranfahren eines Sortierfahrzeugs 18, ggf. mit hoher Geschwindigkeit zum Ausnutzen einer Massenträgheit, das Sortiergut 14 auf den Aufnahmebereich 34 gelangen kann, möglicherweise herabrutscht und von dem Bereich 34b wiederaufgenommen werden kann. Der Bereich 34b kann aber beispielsweise ebenso wie der Aufnahmebereich 34a auch auf einer Bodenfläche implementiert werden, auf welche das Sortiergut 14 gelegt beziehungsweise, von wo es aufgenommen wird.

Die Sortiergutübernahmestation 26 kann auch als Werkzeug betrachtet werden, das bedeutet, zumindest einer der Einschleusepunkte 12 kann ein Werkzeug aufweisen, das ausgebildet ist, um ein Sortiergut aufzunehmen.

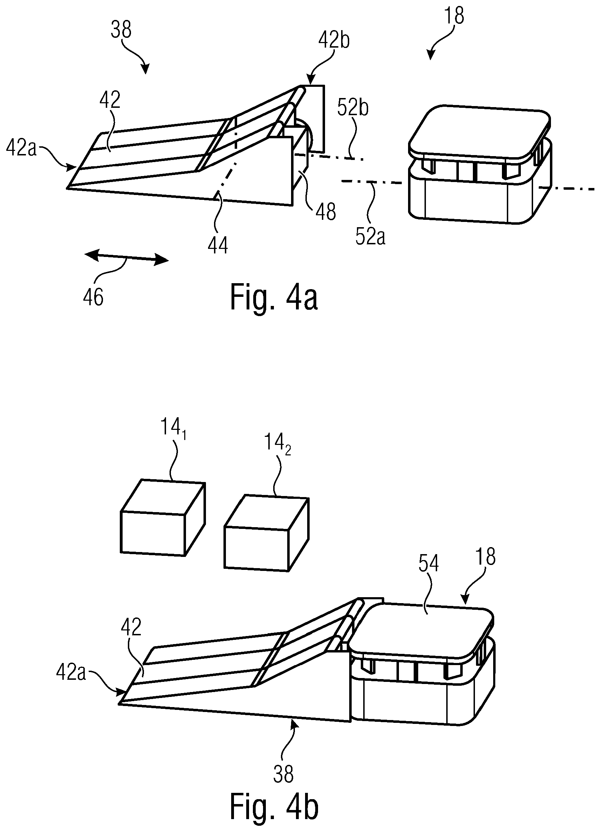

Fig. 4a zeigt eine schematische perspektivische Ansicht eines Sortierfahrzeugs 18 gemäß einem Ausführungsbeispiel, das sich benachbart zu einem Werkzeug 38 in dem Sortiersystem 100 aufhalten kann. Das Werkzeug 38 kann eine oder mehrere Einrichtungen 42 zur Beförderung eines Sortierguts aufweisen, indem beispielsweise eine Bewegung aufwärts oder abwärts beziehungsweise von einem ersten Bereich 42a zu einem zweiten Bereich 42b oder in die andere Richtung ausgeführt wird. Das Werkzeug 38 kann stationär oder mobil gebildet sein. Beispielsweise kann ein Fahrwerk um eine Achse 44 drehbar gelagert sein, so dass das Werkzeug entlang einer Bewegungsrichtung 46 beweglich sein kann.

Das Sortierfahrzeug 18 kann eine Schnittstelle aufweisen, die ausgebildet ist, um mit dem Werkzeug 38 gekoppelt zu werden, das bedeutet, das Werkzeug 38 basierend auf einer Kopplung aufzunehmen. Die Kopplung kann beispielhaft mechanisch ausgelegt sein, beispielsweise durch Einrasten, einer Schraubverbindung einer Bajonettverbindung, durch Einhaken oder dergleichen, kann aber auch andere Prinzipien verwenden, beispielsweise eine magnetische Kopplung. Das Werkzeug 38 kann eine korrespondierende Schnittstelle aufweisen, um mit dem Sortierfahrzeug 18 gekoppelt zu werden.

Bei zumindest paralleler Ausrichtung, bevorzugt aber Übereinstimmung von Bewegungsachsen 52a des Sortierfahrzeugs 18 und 52b des Werkzeugs 38, kann beispielsweise bei einem Herannahen des Sortierfahrzeugs 18 an das Werkzeug 38 die Kopplung ausgeführt werden. Das Werkzeug 38 kann beispielsweise ausgebildet sein, um ein Sortiergut 14 aufzunehmen, beispielsweise von einer Bodenfläche oder der im Zusammenhang mit den Fig. 2 und 3 erläuterten Sortiergutübernahmestationen. So kann beispielsweise das in Fig. 4b mit dem Werkzeug 38 gekoppelte Fahrzeug 18 an ein Sortiergut 14₁ und/oder 14₂ heranfahren, um es beispielsweise im Bereich 42a aufzunehmen, so dass das Werkzeug 38 das Sortiergut 14₁ oder 14₂ auf einen Sortiergutaufnahmebereich 54 des Sortierfahrzeugs 18 transportieren kann. Optional kann vorgesehen sein, dass zur Unterstützung der Sortiergutaufnahme das Sortierfahrzeug 18 gegen ein möglicherweise stationäres oder zumindest gewichtsmäßig schweres Hindernis fährt, so dass das Sortiergut 14₁ oder 14₂ auf den Bereich 42a des Werkzeugs 38 geschoben wird. Alternativ oder zusätzlich ist es möglich, dass die Steuerungseinrichtung 24 ein anderes Sortierfahrzeug dergestalt steuert, dass es ein Sortiergut auf den Bereich 42a schiebt. Durch Umkehrung einer Förderrichtung des Förderbandes kann auch ein Transport von dem Sortiergutaufnahmebereich 54 in Richtung des Bereichs 42a erfolgen, etwa durch starkes Abbremsen des Sortierfahrzeugs 18 oder dergleichen.

Nach erfolgter Aufnahme oder Abgabe des Sortierguts kann das Fahrzeug 18 eine Entkopplung von dem Werkzeug 38 ausführen und beispielsweise das Werkzeug 38 zurücklassen. Das Werkzeug 38 kann an einem Einschleusepunkt 18 angeordnet oder zurückgelassen werden oder diesen Einschleusepunkt gar definieren. Daraus ergibt sich auch eine dynamische Positionierung eines Einschleusepunktes, etwa wenn das Werkzeug 38 an einem veränderlichen Ort zurückgelassen werden kann.

Die genannten Erläuterungen sind ohne Weiteres auch für andere Werkzeuge gültig, beispielsweise für einen Greifer, um ein Sortiergut zu greifen, einen Anhänger, der eine zusätzliche Fläche zur Lastaufnahme bereitstellen kann und von einem Sortierfahrzeug 18 oder einem anderen Anhänger gezogen werden kann, auf eine Einrichtung zur Identifikation oder dergleichen. Das bedeutet, dass ein Sortiersystem gemäß einem Ausführungsbeispiel ausgebildet ist, um an oder benachbart zu einem Einschleusepunkt und/oder einer Endstelle und/oder einem anderen Ort, ein für eine Identifikation eines Sortierguts bestimmtes Werkzeug für eine Aufnahme beziehungsweise Kopplung durch ein Sortierfahrzeug bereitzustellen. Es ergibt sich daraus ebenfalls die Möglichkeit, dass eines der genannten Werkzeuge alternativ oder zusätzlich zu einer Verwendung mittels eines Sortierfahrzeugs mit einem Sortierfahrzeug an einen anderen Ort transportiert wird, beispielsweise, um dort verwendet zu werden.

Bezug nehmend auf die Erläuterungen im Zusammenhang mit der Fig. 4a und der Fig. 4b kann ein Einschleusepunkt eines hierin beschriebenen Sortiersystems ausgebildet sein, um das Sortiergut unter Verwendung des Werkzeugs 38 oder eines anderen hierzu geeigneten Werkzeugs an ein Sortierfahrzeug 18 zu übergeben. Gemäß einem Ausführungsbeispiel ist der Einschleusepunkt ausgebildet, um das Sortiergut 14 von einer Bodenfläche aufzunehmen und/oder um das Sortiergut an zumindest eines aus einem Sortierfahrzeug, eine Übergabestation des Sortiersystems und einem Aufbewahrungsvolumen, etwa einem Rollcontainer oder dergleichen zu übergeben. Eine weitere Verwendung des Werkzeugs 38 besteht beispielsweise darin, um ein auf die Bodenfläche gefallenes Sortiergut unter Verwendung des Werkzeugs 38 aufzunehmen, was in einem Bereich des Einschleusepunktes aber auch abseits hiervon erfolgen kann. So sehen manche Ausführungsbeispiele vor, ad-hoc-Einschleusepunkte umfassend mobile Werkzeuge in Kombination mit den Sortierfahrzeugen zu bilden, d. h., ein Sortierfahrzeug kann gesteuert durch die Fahrzeugsteuerung und/oder die Steuerungseinrichtung des Sortiersystems ein mobiles Werkzeug verwenden, um einen ad-hoc-Einschleusepunkt bereitzustellen, an denen Sortiergut, etwa Pakete vom Boden aufgenommen werden können. Hierzu kann eine Steuerungsfunktion des Sortiergutsystems eingerichtet sein, um den Einschleusepunkt und/oder das Sortierfahrzeug entsprechend zu steuern. Ein Feststellen, dass ein Sortiergut auf der Bodenfläche befindlich ist, etwa durch einen Fehler im Sortiersystem oder ein versehentliches Herunterfallen, kann bspw. durch mobile oder stationäre Erfassungseinrichtungen, etwa ein Kamerasystem, erfolgen. Ein stationäres Kamerasystem kann zumindest eine Kamera umfassen, die bspw. an einer erhöhten Position, etwa an einem Masten oder einer Raumdecke angeordnet ist, um zumindest einen Teilbereich der Bodenfläche zu überwachen. Ein mobiles Kamerasystem, das alternativ oder zusätzlich zu einem stationären Kamerasystem angeordnet sein kann, kann bspw. zumindest eine an einem Sortierfahrzeug oder einem anderen Boden- oder Luftfahrzeug angeordnete Kamera aufweisen, die eingerichtet ist, um die Bodenfläche zu erfassen. Hierzu können sich bspw. Drohnen eignen.

Ausführungsbeispiele schaffen somit ein Sortiersystem, das ein Werkzeug umfasst, das ausgebildet ist, um ein Sortiergut aufzunehmen und/oder um eine Identifikation eines Sortierguts zu ermöglichen, und das ausgebildet ist, um mit der Schnittstelle des Fahrzeugs gekoppelt zu werden, wobei die Kopplung beispielhaft mechanisch und/oder magnetisch erfolgen kann.

Gemäß einem Ausführungsbeispiel ist zumindest eines der Sortierfahrzeuge ausgebildet, um eine Kopplung mit dem bereitgestellten Werkzeug auszuführen, um das Werkzeug zur Aufnahme des Sortierguts zu verwenden, um das Werkzeug danach zu entkoppeln und an einem Abgabeort oder Ablageort zu hinterlassen.

Gemäß einem Ausführungsbeispiel ist zumindest ein Sortierfahrzeug ausgebildet, um ein für eine Identifikation eines Sortierguts bestimmtes Werkzeug aufzunehmen, und für eine Identifikation eines Sortierguts zu verwenden. Basierend auf der Identifikation kann ein Zielort des Sortierguts bestimmt werden, wobei das Fahrzeug ausgebildet sein kann, um basierend auf der Identifikation einen Zielort des Sortierguts zu bestimmen, etwa über entsprechende Daten, die in dem Sortierfahrzeug hinterlegt oder zumindest zugänglich sind. Alternativ oder zusätzlich kann ein Ergebnis der Identifikation an das Sortiersystem übermittelt werden, was eine Zielortbestimmung an einer anderen Einrichtung des Sortiersystems ermöglichen kann.

Gemäß einem Ausführungsbeispiel ist zumindest ein Sortierfahrzeug ausgebildet, um ein für eine Identifikation eines Sortierguts bestimmtes Werkzeug aufzunehmen und zu transportieren. Dies ermöglicht es beispielsweise, ein entsprechendes Identifikationswerkzeug in geringer Anzahl in dem Sortiersystem vorzusehen und vermittels eines Sortierfahrzeugs an eine benötigte Position oder einen benötigten Bereich zu transportieren.

Wie es im Zusammenhang mit den Fig. 4a und 4b beschrieben ist, kann ein Sortierfahrzeug ausgebildet sein, um ein Sortiergut von einer Bodenfläche aufzunehmen. Hierzu kann das Sortierfahrzeug entsprechende Elemente oder Werkzeuge aufweisen, oder kann, wie es in den Fig. 4a und 4b dargestellt ist, ausgebildet sein, um zumindest zeitweise eine Kopplung mit einem Werkzeug, etwa dem Werkzeug 38, insbesondere einer Gurtfördereinrichtung bereitzustellen, um unter Verwendung des Werkzeugs das Sortiergut aufzunehmen.

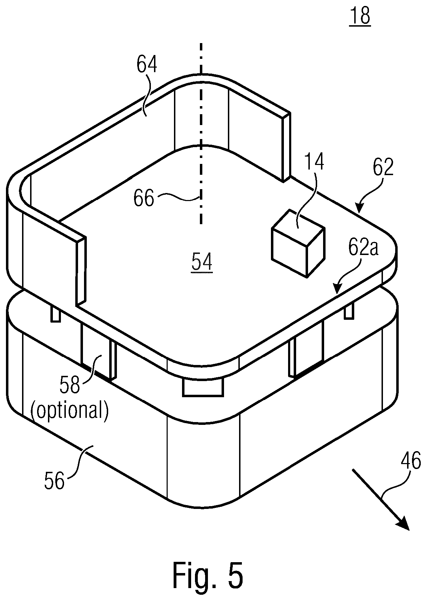

Fig. 5 zeigt eine schematische perspektivische Ansicht einer möglichen Implementierung eines oder mehrerer Sortierfahrzeuge 18 gemäß einem Ausführungsbeispiel. Das Sortierfahrzeug 18 kann ein Fahrwerk oder Fahrgestell 56 aufweisen, das beispielsweise als omnidirektionales Fahrwerk ausgebildet ist. Auf einem optionalen Zwischenkörper 58, etwa Abstandsstege oder dergleichen, kann ein Transportbereich 62, der den Sortiergutaufnahmebereich 54 bereitstellen kann, angeordnet sein. Beispielweise kann der Sortiergutaufnahmebereich 54 teilweise durch einen Haltebereich oder Begrenzungsbereich 64 begrenzt sein, über welchen ein Hinausrutschen oder Hinausgleiten eines Sortierguts erschwert oder verhindert ist.

An unbegrenzten Bereichen des Sortiergutaufnahmebereichs 54 kann hingegen ein Hinausrutschen oder Hinausgleiten eines Sortierguts 14 ermöglicht, bevorzugt oder gar wünschenswert sein. Ein derartiges Sortierfahrzeug mit dem Sortiergutaufnahmebereich 54, welcher auf dem Fahrwerk 56 angeordnet ist, wobei die Sortiergutaufnahme beziehungsweise der Transportbereich 62 das Sortiergut am Rand derselben ein sicherndes Haltelement, den Haltebereich 64, aufweisen kann, kann vermittels einer Steuereinrichtung oder Fahrzeugsteuerung, etwa lokal oder zentral, durch die Steuerungseinrichtung 24, so gesteuert werden, dass die Fahrzeugsteuerung den Haltebereich 64 jeweils aufgrund einer aktuellen oder erwarteten Beschleunigung oder Verzögerung (negative Beschleunigung) des Fahrwerks 56 so zur aktuellen Fahrtrichtung um eine Vertikalachse 66 ausrichtet, dass sich der Haltebereich 64 wenigstens auf der Seite des Transportbereichs 62 beziehungsweise des Sortiergutaufnahmebereichs 54 befindet, auf welche sich das Sortiergut nach Überwindung einer Haftreibung zwischen der Oberfläche des Sortiergutaufnahmebereichs 54 und der Kontaktoberfläche des Sortierguts zubewegt. So kann beispielsweise vermittels des omnidirektionalen Antriebssystems im Fahrwerk 56 die Rotation um die Vertikalachse 66 bereitgestellt werden. Besteht nun aufgrund der Beschleunigung oder Verzögerung des Fahrzeugs die Möglichkeit, Wahrscheinlichkeit oder dergleichen, dass das Sortiergut über den offenen Bereich des Transportbereichs 62 hinausrutschen würde, so kann eine Drehung des Fahrzeugs erfolgen, wobei gleichzeitig die Bewegungstrajektorie des Fahrzeugs im Sortiersystem selbst beibehalten werden kann.

Sortierfahrzeuge in hierin beschriebenen Ausführungsbeispielen können eine Lastaufnahmevorrichtung zur Aufnahme des Sortierguts und eine Lastabgabevorrichtung zur Abgabe des Sortierguts aufweisen. Hierbei kann es sich um ein Werkzeug und/oder um eine mechanische Einrichtung und/oder um eine Fahrzeugsteuerung handeln, die bspw. zur Abgabe des Sortierguts eine abrupte Bremsung bewirkt, um ein Rutschen des Sortierguts auszulösen, um so eine Abgabe des Sortierguts zu bewirken. Die Bremsung wird bevorzugt beim Herannahen an eine Endstelle oder einen Übergabepunkt ausgelöst, um das Sortiergut dort abzugeben. Die Lastaufnahmevorrichtung und die Lastabgabevorrichtung können somit auch durch eine unterschiedliche Verwendung einer identischen mechanischen und/oder softwareimplementierten Einrichtung bereitgestellt werden.

Bei Betrachtung des Sortierfahrzeugs 18 aus der Fig. 5 wird deutlich, dass bei einer abrupten Verzögerung während einer Fahrt entlang der Bewegungsrichtung 46 ein schematisch dargestelltes Sortiergut 14 relativ zu dem Sortierfahrzeug 18 über eine Kante 62a hinausrutschen könnte. Während einer Fahrt kann die Fahrzeugsteuerung so eingerichtet sein, um dies vermittels der Rotationsbewegung des Fahrzeugs zu verhindern. Es kann jedoch auch gewünscht sein, ein eben jenes Hinausrutschen zu nutzen oder gar zu provozieren, etwa zur Abgabe des Sortierguts, beispielsweise an die Sortiergutübernahmestation 26 der Fig. 2 und/oder 3. So kann beispielsweise eine Bewegung des Sortierfahrzeugs 18 dergestalt ausgeführt werden, dass die Kante 62a auf den Bereich 34a der Sortiergutübernahmestation zu bewegt wird und beispielsweise durch eine Fahrwerksteuerung und/oder unter Zuhilfenahme des Federelements 32, welches alternativ oder zusätzlich auch am Fahrzeug angeordnet sein, die abrupte Verzögerung zu erzeugen.

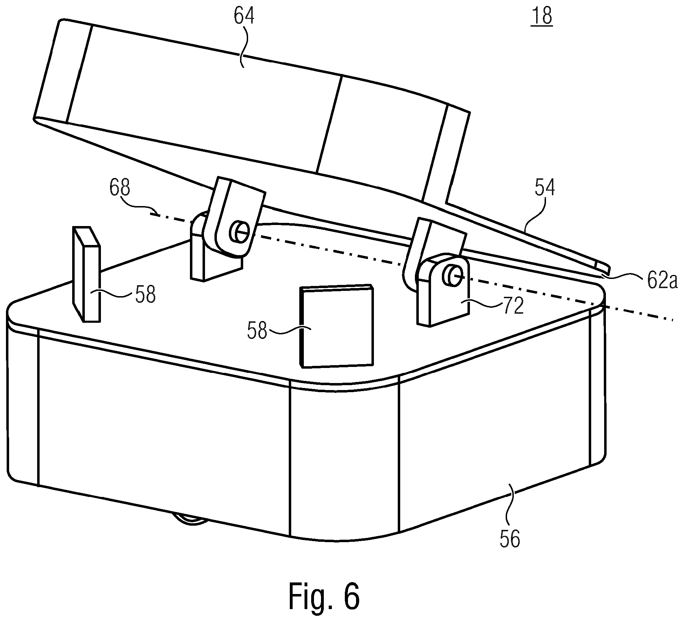

Anhand von Fig. 6, die eine schematische perspektivische Ansicht eines Sortierfahrzeugs 18 mit Klappschale zeigt, soll ein Aspekt herausgestellt werden, der alternativ oder zusätzlich zu anderen Übergabemechanismen hierin beschriebener Ausführungsbeispiele implementiert werden kann. Es kann beispielweise ausgehend von der Darstellung der Fig. 5 der Transportbereich 62 kippbar gelagert sein, so dass die Sortiergutaufnahme zum Transportieren von Sortiergut und zur Übergabe des Sortierguts auf eine Sortiergutübernahmestation mit dem Fahrgestell und dem darin befindlichen Fahrwerk gekoppelt ist. Das Fahrwerk ist dabei mit einer Antriebseinheit gekoppelt, etwa den omnidirektionalen Antriebseinheiten. Eine Fahrzeugsteuerung des Sortierfahrzeugs 14 ist ausgebildet, um die Sortiergutaufnahme um eine Kippachse 68 kippbar am Fahrgestell auszulenken. Hierzu kann beispielsweise ein Kipplager 72 vorgesehen sein, das die Kippachse 68 bereitstellt. Mehrerer solcher Kipplager 72 können miteinander kombiniert werden, etwa um eine Verkippung entlang unterschiedlicher Richtungen bereitzustellen. Vermittels mechanischer Auslegung kann dabei eine Kraft, die erforderlich ist, um das Kippen des Sortiergutaufnahmebereichs 54 auszulösen, eingestellt werden. Obwohl das Sortierfahrzeug der Fig. 6 so dargestellt ist, dass zumindest ein Bereich von dem Haltebereich 64 ausgenommen ist, kann dieser auch entfernbar und zeitweise anwesend sein, beispielsweise über einen aktiv steuerbaren Klappmechanismus oder andere aktive Einrichtungen.

Die Kippachse 68 kann so ausgerichtet sein, dass sie übereinstimmend zu einem Abgaberand 62a so zueinander angeordnet sind, dass in gekippter Lage des Sortiergutaufnahmebereichs 54 das Sortiergut über den Abgaberand 62a auf die Sortiergutübernahmestation übergebbar ist, das bedeutet, hinabgleitet, hinabrutscht oder anderweitig bewegt wird. Zur Übergabe des Sortierguts auf die Sortiergutübergabestation kann die Sortiergutaufnahme durch ein durch eine Veränderung des Vektors der Geschwindigkeit, etwa eine rasche Verzögerung oder, alternativ, eine rasche Beschleunigung des Sortierfahrzeugs 14 um die Kippachse 68 gekippt werden. Es ist alternativ oder zusätzlich zu einer Änderung der Vektorlänge bzw. einer Geschwindigkeitsänderung ebenfalls möglich, dass die Fahrzeugsteuerung und/oder eine zentrale Instanz der Steuerungseinrichtung 24 des Sortiersystems eine Richtung des Vektors der Geschwindigkeit ändert, bspw. um eine plötzliche Richtungsänderung oder eine Kurvenfahrt des Sortierfahrzeugs 18 auszulösen, was eine Übergabe ebenfalls ermöglichen kann, da durch die hierdurch resultierenden Trägheitskräfte auf die Sortiergutaufnahme ein Kippen ebendieser um die Kippachse 68 ausgelöst werden kann. Eine derartige Steuerung ist mit einem kippbaren Transportbereich 62 ebenso möglich wie ohne eine derartige Kippachse 68. Auch ohne Kippachse 68 kann eine Veränderung des Vektors der Geschwindigkeit genutzt werden, um ein beabsichtigtes Herabrutschen des Sortiergutes von dem kippbaren oder nicht kippbaren Transportbereich 62 zu bewirken. Ausführungsbeispiele sehen auch eine Kombination dieser Lösungen vor, indem ein Sortierfahrzeug zwar einen kippbar gelagerten Transportbereich 62 aufweist, das Sortierfahrzeug 18 aber zumindest in einigen Übergabesituationen so gesteuert wird, dass der Transportbereich nicht verkippt, aber das Sortiergut etwa aufgrund einer Richtungsänderung und/oder einer entsprechenden Orientierung der Kippachse 68 zum Vektor der Geschwindigkeit dennoch vom Transportbereich 62 rutscht oder gleitet. Hierdurch kann das Sortierfahrzeug mit unterschiedlichen Ausgestaltungen von Übergabestationen genutzt werden.

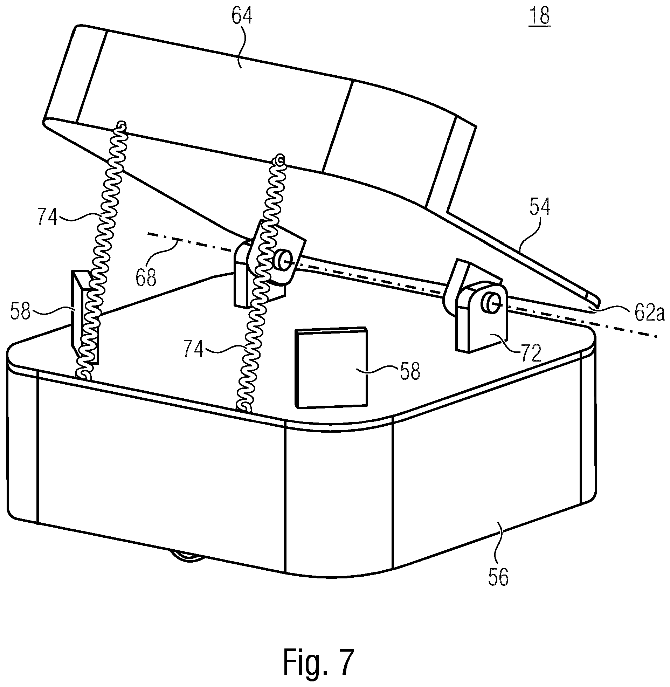

Fig. 7 zeigt eine hierzu korrespondierende Darstellung, bei der zusätzlich eine Federbeaufschlagung vermittels einem oder mehrerer Federelemente 74 eingerichtet ist, wobei das eine oder mehrere Federelement 74 den Kippvorgang unterstützen können (beispielsweise bei einer Implementierung als Druckfeder) oder eine erforderliche Kraft erhöhen können, beispielsweise bei einer Implementierung als Zugfeder. Das bedeutet, dass eine Federbeaufschlagung der Sortiergutaufnahme genutzt werden kann, um ein Drehmoment zu erzeugen, um die Verkippung um die Kippachse bereitzustellen.

Unabhängig von einer Implementierung mit oder ohne Federelemente und/oder unabhängig davon, ob der Transportbereich 62 kippbar ist, kann ein Sortierfahrzeug somit ausgebildet sein, um das Sortiergut 14 unter Verwendung einer durch eine Fahrtbewegung des Sortierfahrzeugs bereitgestellten kinetischen Energie des Sortierguts abzugeben, also bspw. indem das Fahrzeug abgebremst wird und Trägheiten des Sortierguts 14 zu einer relativen Bewegung des Sortierguts bezüglich des Fahrzeugs führen, so dass das Sortiergut 14 abgegeben wird. Auch durch ein solches Abbremsen kann eine Veränderung des Vektors der Geschwindigkeit, welche die Abgabe bewirken kann, erreicht werden.

Gemäß einem Ausführungsbeispiel kann ein fahrerloses Sortierfahrzeug, etwa zum Einsatz in hierin beschriebenen Sortiersystemen, so ausgestaltet sein, dass es eine Antriebseinrichtung und eine Steuereinrichtung zur Steuerung der Antriebseinrichtung aufweist. Die Steuereinrichtung ist ausgebildet, um für eine Abgabe des Sortierguts 14 an eine Endstelle 16 die Antriebseinrichtung für ein Abbremsen des fahrerlosen Sortierfahrzeugs vor einem Erreichen der Endstelle 16 anzusteuern, um durch das Abbremsen und/oder eine gezielte Kurvenfahrt unter Einwirkung der kinetischen Energie eine Relativbewegung des Sortierguts 14 bezüglich des fahrerlosen Sortierfahrzeugs zu erzeugen; um vermittels der Relativbewegung die Abgabe an die Endstelle 16 zu bewirken. Es kann somit vermittels eines Abbremsens und/oder einer Kurvenfahrt in der Antriebseinrichtung zum Verändern des Vektors der Geschwindigkeit ein Herabrutschen des Sortierguts vom Sortierfahrzeug und/oder eine Kippbewegung einer Kippschale ausgelöst werden.

Alternativ oder zusätzlich kann die Steuerungseinrichtung 24 und/oder die lokale Steuerung des Fahrzeugs ausgebildet sein, um für eine Abgabe des Sortierguts 14 an eine Endstelle 16 die Antriebseinrichtung für einen Aufprall des fahrerlosen Sortierfahrzeugs an einen Kontaktbereich der Endstelle 16 anzusteuern, um durch des Aufpralls unter Einwirkung der kinetischen Energie eine Relativbewegung des Sortierguts 14 bezüglich des fahrerlosen Sortierfahrzeugs zu erzeugen; um vermittels der Relativbewegung die Abgabe an die Endstelle 16 zu bewirken. Es kann somit vermittels eines Abbremsens durch den Aufprall ein Herabrutschen des Sortierguts vom Sortierfahrzeug und/oder eine Kippbewegung einer Kippschale ausgelöst werden. Hierdurch kann ein Bremsweg gegenüber einem Abbremsen in dem Antriebsstrang verkürzt werden, was aber zu höheren mechanischen Belastungen führen kann. Andererseits kann eine gegenüber einer Steuerung in der Antriebseinrichtung gesteuerten Abbremsung eine stärkere Abbremsung ermöglicht werden, was eine noch wirksamere trägheitsbasierte Übergabe ermöglichen kann. Anders ausgedrückt kann durch den mechanischen Aufprall die mechanische Zwangsbedingung, also den Einschlag, die momentane negative Beschleunigung des Sortierfahrzeugs auf einen Wert vergrößert werden, der deutlich größer sein kann als durch das reine Abbremsen. Dadurch können auch große Reibungskräfte zwischen Ladegut und Ladegutaufnahme überwunden werden, weil die Trägheitskraft des Ladeguts (bezogen auf die Fläche der Ladegutaufnahme) durch die starke Abbremsung des Sortierfahrzeugs stärker ist. Hierzu sehen Ausführungsbeispiele vor, dass die Übernahmestation und/oder das Sortierfahrzeug mechanische Stoßfänger oder engl.: Bumper aufweist, und die Steuerung des Sortiersystems und/oder des Sortierfahrzeugs eingerichtet ist, um das Fahrzeug so zu steuern, dass der Aufprall an einem solchen Bumper erfolgt.

Ein derartiger Aufprall kann durch ein Abbremsen in der Antriebseinrichtung ohne Weiteres kombiniert werden, um ein Optimum an kurzen Bremsweg einerseits und geringen mechanischen Belastungen andererseits zu erhalten.

Gemäß einem Ausführungsbeispiel, das sowohl mit dem Abbremsen im Antriebsstrang als auch mit dem herbeigeführten Aufprall kombinierbar ist, kann das fahrerlose Sortierfahrzeug 18 eine Sortiergutaufnahme aufweisen, die gegenüber einem mit der Antriebseinrichtung gekoppelten Fahrgestell des fahrerlosen Sortierfahrzeuges beweglich, etwa verkippbar angeordnet ist, und die Relativbewegung eine Bewegung des Sortierguts 14 in der Sortiergutaufnahme gegenüber dem Fahrgestell umfasst, wie es bspw. in den Fig. 6, 7 oder 8b dargestellt ist.

Ein fahrerloses Sortierfahrzeug 18 des Sortiersystems kann die Sortiergutaufnahme 54 aufweisen, die bereichsweise von dem Haltebereich 64 begrenzt ist, der ausgebildet ist, um ein Hinausrutschen oder Hinausgleiten eines Sortierguts 14 zumindest zu erschweren, wie es im Zusammenhang mit Ausführungsbeispielen beschrieben ist. Die Steuerungseinrichtung 24 oder die Steuereinrichtung 86 des Sortierfahrzeugs kann ausgebildet sein, den Haltebereich 64 während einer Fahrt des fahrerlosen Sortierfahrzeuges 18 als Transportsicherung für das Sortiergut 14 zu positionieren. Dies kann genutzt werden, um den Haltebereich 64 entgegen der Richtung der auftretenden oder erwarteten Trägheitskraft zu positionieren, um die Transportsicherung zu implementieren. Als Grundlage kann der derzeitige Vektor der Geschwindigkeit des Fahrzeugs und/oder eine erwartete Änderung des Vektors der Geschwindigkeit des Sortierfahrzeugs, also eine Beschleunigung oder Verzögerung oder Richtungsänderung des Fahrwerks herangezogen werden. Eine erwartete Änderung des Vektors der Geschwindigkeit kann bspw. aufgrund einer zumindest teilweise vorbekannten Trajektorie, in welche das Sortierfahrzeug 18 gesteuert wird, von der erwartet wird, dass diese gefahren wird, zukünftig erwartet werden.

Weiterhin sehen Ausführungsbeispiele vor, das Sortierfahrzeug 18 zur Übergabe, insbesondere zur Abgabe des Sortierguts 14 zumindest in einigen Situationen in eine Kurvenfahrt oder zur Richtungsänderung zu steuern. Das Sortiersystem kann zur lokalen und/oder zentralen Steuerung des Sortierfahrzeugs 18 ausgelegt sein, um den Haltebereich 64 vor der bewirkten Übergabe in eine Position oder Orientierung zu bewegen, dass der Haltebereich 64 die Abgabe nicht weiter behindert, etwa wenn er zwischenzeitlich dem Vektor der Geschwindigkeit folgend als Transportsicherung positioniert wird.

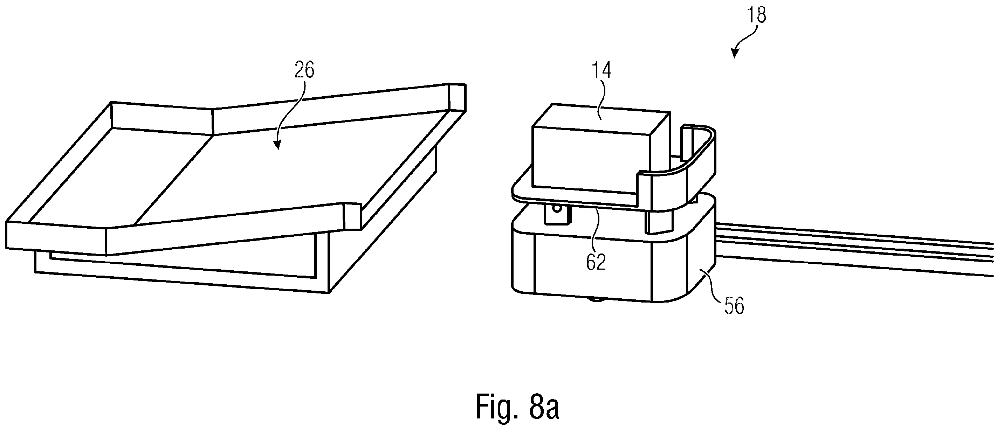

Fig. 8a zeigt eine schematische perspektivische Darstellung eines Zustands während einer Annäherung eines beschriebenen Sortierfahrzeugs 18 an die Sortiergutübernahmestation 26. Das Sortiergut 14 ist beispielhaft in dem Transportbereich 62 beziehungsweise dem Sortiergutaufnahmebereich 54 angeordnet.

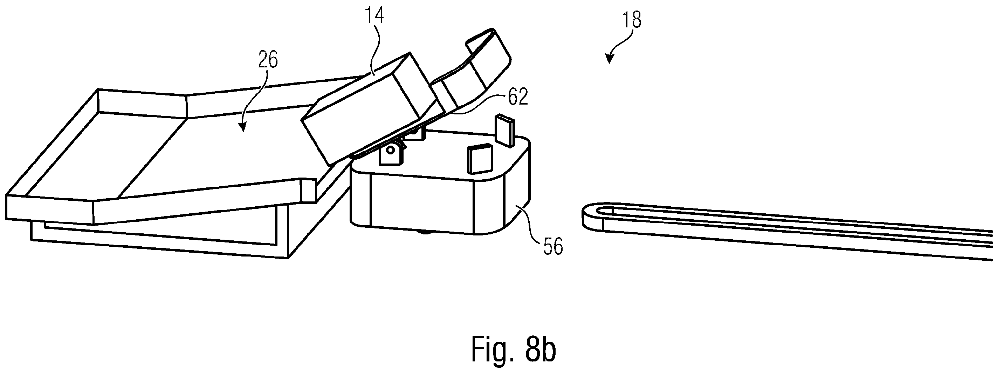

In der in der Fig. 8b dargestellten Situation, die aus der Situation gemäß Fig. 8a hervorgehen kann, ist das Sortierfahrzeug 18 an die Sortiergutübernahmestation 26 herangefahren und bremst ab, wodurch eine Kippung des Transportbereichs 62 erfolgt, der ein Herabrutschen des Sortierguts 14 auf die Sortiergutübernahmestation 26 verursachen kann.

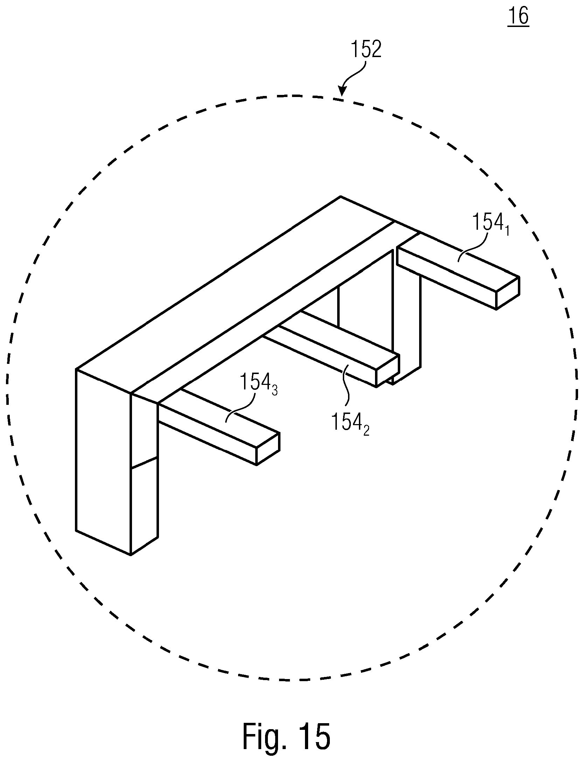

In Ausführungsbeispielen ist zumindest eine Endstelle durch eine installierte Infrastruktur definiert, beispielsweise als Zugang für einen Rollcontainer, ein zusätzliches Förderband oder dergleichen. Alternativ oder zusätzlich kann zumindest eine Endstelle durch zeitlich veränderliche Objekte und/oder zeitlich veränderliche Positionen in einem Sortiersystemlayout definiert sein, und beispielsweise unabhängig von einer Infrastruktur sein. Beispielsweise kann eine im Zusammenhang mit der Fig. 15 erläuterte Struktur im Raum verschiebbar sein, um einen Einschleusepunkt, eine Übergabestelle und/oder eine Endstelle zu implementieren. Eine Verschiebung einer solchen Struktur kann zu einem veränderlichen Layout führen. Gemäß anderen Ausführungsformen kann eine Endstelle auch bereits durch eine entsprechende Fläche definiert sein, auf welche das Sortiergut gelegt wird.

Gemäß einem Ausführungsbeispiel umfasst die zumindest eine Endstelle eine elektrisch passive Rutscheneinrichtung, die eine Ebene oder geneigt abfallende Oberfläche aufweist, die eine Pufferfunktion für eine Mehrzahl von Sortiergütern aufweist. So wird beispielsweise aus der Darstellung der Fig. 2 und/oder der Darstellung der Fig. 3 deutlich, dass möglicherweise auch mehrere Sortiergüter 14 an der Sortiergutübernahmestation 26 abgelegt werden können. Gemäß einem Ausführungsbeispiel weist die Endstelle eine elektrisch passive Rutscheneinrichtung auf und weist eine Ebene oder geneigte Oberfläche auf, die eine Abbremseinrichtung aufweist, wie sie beispielsweise in der Fig. 2 dargestellt ist, siehe hierzu das Federelement 32. Die Abbremseinrichtung kann ausgebildet sein, um ein auffahrendes Sortierfahrzeug abzubremsen, um dadurch eine massenträgheitsbasierte Übergabe des Sortierguts an die Rutscheneinrichtung zu ermöglichen.

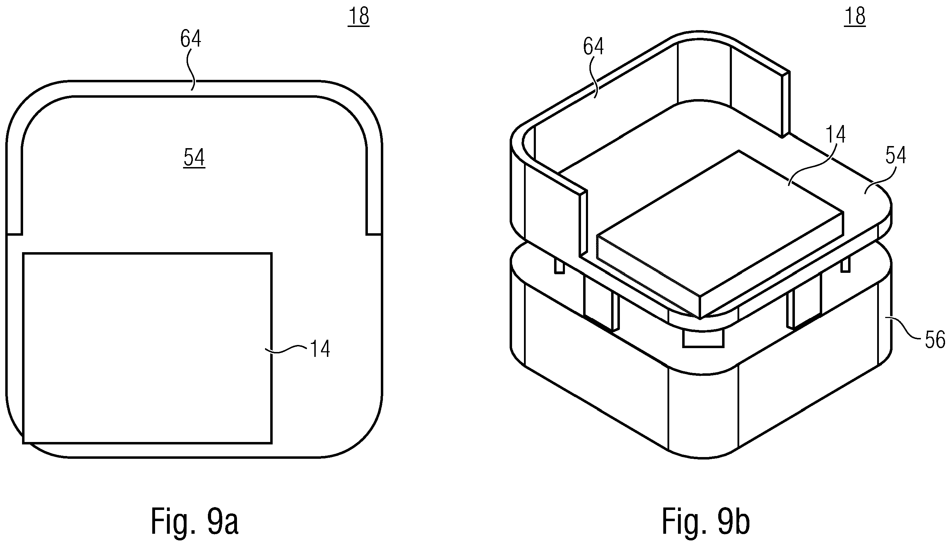

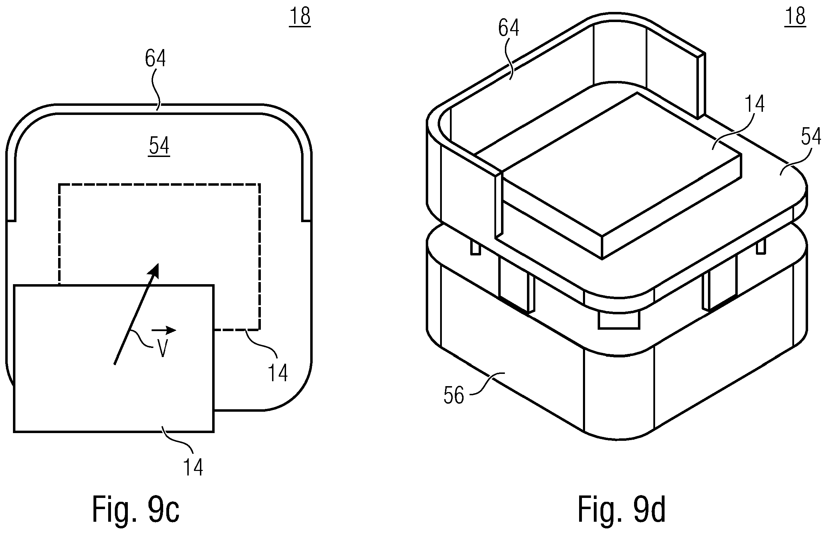

Die bisherigen Erläuterungen zum Ausnutzen einer Massenträgheit des Sortierguts 14 werden durch die Erläuterungen der Fig. 9a bis 9d erweitert. Es ist möglich, dass aufgrund von Fehlplatzierungen oder anderen Ereignissen eine unterwünschte Platzierung des Sortierguts 14 auf dem Sortierfahrzeug 18 erfolgt. Ausführungsbeispiele sehen vor, dass das Sortierfahrzeug 18 eingerichtet ist, um eine solche Fehlplatzierung zu korrigieren beziehungsweise, mehr allgemein, eine Platzierung des Sortierguts 14 in dem Sortiergutaufnahmebereich 54 zu verändern. Hierzu zeigen Fig. 9a und 9c jeweils eine schematische Draufsicht und die Fig. 9b und 9d eine zu den Fig. 9a beziehungsweise 9c korrespondierende perspektivische Ansicht. Gemäß den Fig. 9a ist eine erste Position des Sortierguts 14 in dem Sortiergutaufnahmebereich 54 gegeben. In dem beschriebenen Beispiel ist nun gewünscht, die Position des Sortierguts 14 von der in Fig. 9a dargestellten Position auf die in der Fig. 9c gestrichelt dargestellte Position zu korrigieren, um den Zustand gemäß der Fig. 9d zu erhalten. Hierzu kann ein Verschiebevektor v bestimmt werden, etwa vermittels der Steuerungseinrichtung 24 oder der Fahrzeugsteuerung und die Fahrzeugsteuerung dazu veranlasst werden, das Fahrzeug entgegengesetzt zu dem Verschiebevektor v zu beschleunigen, wobei hierzu die omnidirektionale Antriebseinheit vorteilhaft ausgenutzt werden kann. Dabei ist es möglich, aber nicht erforderlich, von der bisherigen Trajektorie abzuweichen. So kann beispielsweise auch eine Rotation des Sortierfahrzeugs 14 vorangehen, um den Verschiebevektor v parallel zu der Trajektorienbahn auszurichten, um mittels einfacher Beschleunigung oder Verzögerung entlang der Trajektorienbahn die Verschiebung des Sortierguts 14 auf oder in dem Sortiergutaufnahmebereich 54 zu bewirken.

In komplementärer Herangehensweise kann auch eine Verschiebung aus der in der Fig. 9d dargestellten Position in die in der Fig. 9b dargestellte Position erfolgen. Eine Positionserkennung kann beispielsweise mittels Optiken und/oder Gewichtssensoren oder dergleichen erfolgen. Fernerhin kann unter Kenntnisnahme der Sortierguteigenschaften, etwa einer Masse, einer Größe, einer Oberflächenbeschaffenheit des Sortierguts und/oder des Sortiergutaufnahmebereichs, ein unbeabsichtigtes Verrutschen auch vermieden werden. Unter Kenntnis dieser Eigenschaften kann eine Trajektorie des Sortierfahrzeugs 18 in dem Sortiersystem 100 entsprechend gesteuert werden.

Das bedeutet, dass gemäß einem Ausführungsbeispiel ein Sortierfahrzeug oder die Steuereinrichtung 86 des Sortierfahrzeugs oder die Steuerungseinrichtung 24 des Sortiersystems ausgebildet ist, um unter Berücksichtigung einer Sortierguteigenschaft wie beispielsweise einer Größe, einer Masse, einer Oberflächenbeschaffenheit oder dergleichen, eine Steuerung des Sortierfahrzeugs so einzustellen, dass die Sortierfahrzeugfahrt an die Sortierguteigenschaft angepasst ist.

Die Steuerungseinrichtung 24 des Sortiersystems 100 und/oder die Steuereinrichtung 86 des Sortierfahrzeugs 18 kann eingerichtet sein, um eine mechanische Begrenzung, etwa den Haltebereich 64 während der Fahrt so zu positionieren, dass eine Änderung des Fahrt- oder Geschwindigkeitsvektors des Sortierfahrzeugs bei einer entstehenden Relativbewegung des Sortierguts 14 bezüglich des Sortierfahrzeugs 18 ein Herunterrutschen des Sortierguts 14 verhindert. Bspw. kann der Haltebereich während einer Fahrt des Sortierfahrzeugs 18 nach vorne gerichtet sein, um etwa bei einer abrupten Bremsung, bspw. bei einem Notstopp, ein Herunterfallen zu verhindern. Auch bei einer Kurvenfahrt kann der Haltebereich 64 bspw. durch die Steuerungseinrichtung 24 oder Steuereinrichtung 86 so positioniert werden, dass das Herunterfallen verhindert wird, bspw. durch eine Drehung des Sortierfahrzeugs 18. Vor oder während einem Eintreffen des Sortierfahrzeugs 18 an einer Endstelle oder einer Übergabestation kann der Haltebereich 64 an eine nicht störende Position bewegt werden, etwa um ein gewolltes Herunterrutschen des Sortierguts durch ein Abbremsen oder einen Aufprall zu ermöglichen.

Gemäß einem Ausführungsbeispiel ist der Steuerungseinrichtung 24 des Systems 100 und/oder die Steuereinrichtung 86 des Sortierfahrzeugs 18 mindestens ein Parameter der Ladegüter (etwa Gewicht, Dimensionen, Oberfläche (Reibwert), Schwerpunktlage, ...) bekannt (z. B. durch die Sendungsinformation) oder wird identifiziert durch geeignete Sensorik. Eine solche Sensorik kann intern oder extern des Sortierfahrzeugs angeordnet sein und kann bspw. mit Sendungsinformation verknüpft sein. Eine Anordnung extern des Fahrzeugs innerhalb des Systems kann bspw. auf Übergabestation bzw. in der mehr oder weniger direkten Zuführung dazu angeordnet sein, was mit einer Anordnung auch auf dem Fahrzeug kombiniert oder hiervon substituiert werden kann. Es ist möglich, dass verschiedene Parameter durch verschiedene Sensoriken an verschiedenen Orten erfasst werden.

Auf Basis dieser Parameter kann die Fahrt angepasst werden. Dazu kann bspw. die Trajektorie des Fahrzeugs 18, die mindestens den Pfad, die Beschleunigungs- und Geschwindigkeitswerte aufweist, angepasst werden, um dem Fahrzeug zu ermöglichen, dieser Trajektorie zu folgen. Beispielsweise kann bei einem sehr hohen Gewicht des Ladeguts die Beschleunigung des Fahrzeugs reduziert werden, da die benötigten Kräfte sonst durch den Antrieb nicht zuverlässig erzeugt werden könnten. Weiterhin ist beispielsweise eine Anpassung der Lastabgabetrajektorie in Abhängigkeit des Reibwerts des Ladeguts vorgesehen, um eine möglichst präzise und zuverlässige Abgabe zu ermöglichen. Bei einem hohen Reibwert ist eine höhere negative Beschleunigung und ggf. sogar ein kombinierter Aufprall notwendig, um die Haftreibung zwischen Sortiergut und Sortiergutaufnahme zu überwinden und das Sortiergut auf die Endstelle zu bewegen. Bei einem niedrigen Reibwert ist ggf. ein schwächeres Abbremsen ausreichend, wodurch weniger Verschleiß z. B. am Fahrzeug entsteht und durch weniger Geschwindigkeitseinbußen ein höherer Durchsatz des Sortiersystems erzielt werden kann.

Gemäß einem Ausführungsbeispiel kann eine Steuerung und/oder Drehung des Fahrzeugs während einer Kurvenfahrt gesteuert werden, um ein Herunterfallen des Sortierguts von dem Sortierfahrzeug entgegenzuwirken. Bspw. kann die Trägheit des Sortierguts 14 anhand der Trajektorie vorberechnet und/oder abgeschätzt werden. Auf Basis dieser Information dreht sich das Fahrzeug z. B. in einer Kurvenfahrt oder beim Beschleunigen oder Abbremsen so, dass die Ladungssicherung, etwa der Haltebereich 64 des Lastaufnahmemittels so ausgerichtet ist, um das Herunterfallen des Ladeguts zu verhindern, wie es für die Anpassung der Fahrt an die Sortierguteigenschaft beschrieben ist. Die Ladegutaufnahme hat dazu an mindestens einer Seite eine Wand zur Ladungssicherung.

Eines oder mehrere der beschriebenen Manöver kann dabei unter Ausnutzung einer Rotation des Fahrzeugs ausgeführt werden. Dafür kann es vorteilhaft sein, dass das Sortierfahrzeug eine Antriebseinrichtung aufweist, die ausgebildet ist, um das Sortierfahrzeug bezüglich eines Sortierfahrzeugmittelpunktes zu drehen und dabei eine Rotation des Sortierfahrzeugs, etwa in der X/Y-Ebene zu bewirken.

In einem Ausführungsbeispiel umfasst ein Sortiersystem eine Sensoreinrichtung, die ausgebildet ist, um eine relative Ist-Lage eines Sortiergutes auf einem Sortierfahrzeug zu erkennen, wobei die Steuerungseinrichtung 24 ausgebildet ist, um die Ist-Lage mit einer Soll-Lage, vergleiche hierzu die gestrichelte Lage der Fig. 9c, zu vergleichen, und um eine Abweichung von der Soll-Lage festzustellen. Die Steuerungseinrichtung 24 ist ausgebildet, um die Ist-Lage zu verändern, um die Abweichung zumindest zu reduzieren, wobei hierzu eine entsprechende Beschleunigung und/oder Verzögerung des Fahrzeugs genutzt werden kann. Gemäß einem Ausführungsbeispiel ist die Steuerungseinrichtung 24 ausgebildet, um das Fahrzeug so zu steuern, dass die Ist-Lage unter Einwirkung einer Massenträgheit des Sortierguts verändert wird; und/oder um ein Werkzeug zu steuern, um die Ist-Lage zu verändern. Das bedeutet, es kann auch eine Art von Greifer und/oder passiver Vorrichtung genutzt werden, um das Sortiergut auf dem Sortierfahrzeug zu verschieben.

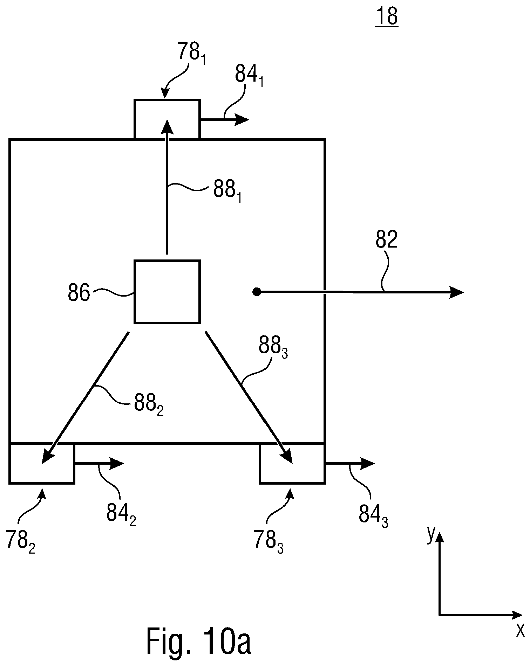

Fig. 10a zeigt ein schematisches Blockschaltbild eines Fahrzeugs 18 gemäß einem Ausführungsbeispiel. Das Fahrzeug 18 umfasst ein omnidirektionales Antriebssystem, das ausgebildet ist, um eine Bewegung des Fahrzeugs bereitzustellen. Im Sinne eines omnidirektionalen Antriebssystems ist es, in Übereinstimmung mit der Definition eines holonomischen Fahrzeugs, jede beliebige Trajektorie beschreiben zu können, zumindest unter Einhaltung der physikalischen Randbedingungen, wie beispielweise Beschleunigungen oder dergleichen. Hierzu weist das omnidirektionale Antriebssystem eine Vielzahl von omnidirektionalen Antriebseinrichtungen 78₁, 78₂ und 78₃ auf. Das omnidirektionale Antriebssystem umfasst zumindest drei, möglicherweise aber auch 4, 5 oder eine höhere Anzahl von Antriebseinrichtungen 78, die symmetrisch oder asymmetrisch verteilt an dem Sortierfahrzeug 18 angebracht sein können. Jede der Antriebseinrichtungen 78₁ bis 78₃ ist beispielsweise eingerichtet, um eine Kraft auf einen befahrenen Untergrund aufzubringen, um eine Kraftkomponente und/oder eine Bewegungskomponente für eine Bewegung 82 des Fahrzeugs 18 bereitzustellen. Von den Antriebseinrichtungen 78₁ bis 78₃ jeweils bereitgestellte Bewegungsbeiträge 84₁, 84₂ beziehungsweise 84₃ können dazu gleichgerichtet sein, das bedeutet, zumindest in ihrer Richtung, bevorzugt aber auch in ihrem Betrag, gleichgerichtet zu sein, beispielsweise um eine Bewegung entlang einer Geraden auszuführen. Die Bewegungsbeiträge 84₁, 84₂ und 84₃ können aber auch entlang unterschiedlicher x/y-Richtungen angeordnet sein, etwa um in Kombination die Bewegung 82 entlang einer Geraden bereitzustellen oder um eine Rotation des Fahrzeugs 18 zu ermöglichen.

Das Fahrzeug 18 umfasst eine Steuereinrichtung 86 zum Bereitstellen eines Steuerbefehls an das omnidirektionale Antriebssystem, der eine Anweisung zur Ausführung der Bewegung 82 enthält. Hierbei kann jede der Antriebseinrichtungen 78₁, 78₂ und 78₃ einen jeweiligen Steuerbefehl 88₁, 88₂ beziehungsweise 88₃ empfangen. Die Steuerbefehle 88₁, 88₂ und 88₃ können voneinander verschieden sein, sind aber bevorzugt übereinstimmend oder identisch gebildet, so dass für ein übereinstimmendes Zeitintervall jede der Vielzahl von omnidirektionalen Antriebseinrichtungen denselben Steuerbefehl erhalten kann. Hierzu können mehrere Signale gleichen Inhalts an unterschiedliche Antriebseinrichtungen 78₁, 78₂ und 78₃ gesendet werden und/oder es kann ein Signal an mehrere Antriebseinrichtungen gesendet werden.

Die Bewegungsbeiträge 84₁ bis 84₃ können dabei aus den Steuerbefehlen direkt extrahiert oder hieraus abgeleitet werden. So kann bspw. der jeweilige Steuerbefehl 88₁ bis 88₃ eine konkrete Anweisung für den jeweiligen dezentralen Antrieb enthalten. Bevorzugt ist es jedoch, dass die dezentrale Antriebseinrichtung unter Kenntnis der Geometrie des Fahrzeugs, etwa der relativen Lage der dezentralen Antriebseinrichtungen aus einem gewünschten, in den Steuerbefehlen 88₁ bis 88₃ angegebenen Fahrtrichtung, Fahrtvektor oder Trajektorie eine anzuwendende Ansteuerung für den jeweiligen Aktuator erstellt, so dass bspw. jede der dezentralen Antriebseinrichtungen eine übereinstimmende Ansteuerung erhalten kann aber basierend auf der unterschiedlichen Lage der jeweiligen dezentralen Antriebseinrichtung 82 unterschiedlich umsetzt, also unterschiedliche Soll-Beiträge erstellt, die die jeweilige Antriebseinrichtung liefern soll.

An dieser Stelle wird deutlich, dass die Bewegung des Fahrzeugs mit der Ansteuerung der einzelnen Antriebseinrichtungen, also deren Soll-Beiträgen direkt verknüpft ist, so dass unter in Ausführungsbeispielen gegebener Kenntnis der Fahrzeuggeometrie eine wechselseitige Überführung zwischen Einzel-Sollbeitrag und Fahrzeugbewegung bzw. tatsächlichem Bewegungsbeitrag und tatsächlicher Fahrzeugbewegung und/oder der Auswirkung, die eine Abweichung zwischen dem Soll-Bewegungsbeitrag und dem tatsächlichen Bewegungsbeitrag auf die Fahrt des Fahrzeugs hat, problemlos von den dezentralen Antriebseinrichtungen bestimmt werden kann und sich Ausführungen auf eines der jeweiligen Begriff-Paares unmittelbar auf den anderen Begriff beziehen.

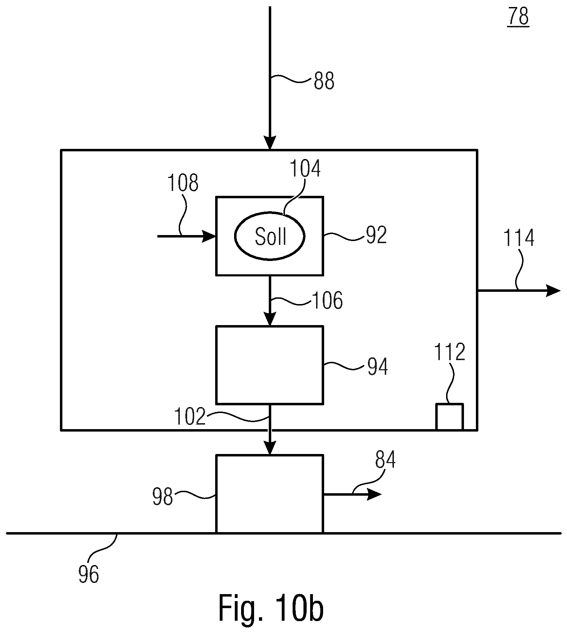

Fig. 10b zeigt ein schematisches Blockdiagramm einer omnidirektionalen Antriebseinrichtung 78 des Fahrzeugs 18, beispielsweise der Antriebseinrichtung 78₁. Die omnidirektionale Antriebseinrichtung umfasst eine dezentrale Berechnungseinrichtung 92 und einen der dezentralen Berechnungseinrichtung zugeordneten und zum Bereitstellen des Soll-Bewegungsbeitrags 84 eingerichteten Aktuator 94. Hierbei ist es möglich, dass der Aktuator 94 direkt in Kontakt mit einer Fortbewegungsfläche 96, beispielsweise einem Untergrund, einem Boden oder dergleichen stehen kann, um den Bewegungsbeitrag 84 direkt zu erzeugen. Alternativ ist ein Übertragungsglied 98 vorgesehen, das eine Kraft 102 des Aktuators 94 empfängt und in den Bewegungsbeitrag 84 umsetzt. Beispielsweise kann das Übertragungsglied 98 ein Rad, insbesondere ein Allseitenrad oder ein Mecanumrad umfassen. Für die meisten der hierin beschriebenen Ausführungsbeispiele ist es jedoch unerheblich, ob der Aktuator 94 und das Übertragungsglied 98 gemeinschaftlich als Aktuator verstanden werden oder als separate Komponenten. Das bedeutet, auch wenn sich manche der hierin erläuterten Ausführungen auf den Aktuator 94 beziehen, schließt dies die gemeinschaftliche Betrachtung mit dem Übertragungsglied 98 nicht aus. Anders ausgedrückt kann die Antriebseinrichtung 78 ein Rad, einen Motor/Aktuator und einen Controller, beispielsweise die Berechnungseinrichtung 92 umfassen. Die Berechnungseinrichtung 92 kann insbesondere einen Prozessor oder CPU, einen Mikrocontroller oder eine andere programmierbare Steuereinrichtung, etwa ein feldprogrammierbares Gatterarray (FPGA) oder dergleichen umfassen.

Die dezentrale Berechnungseinrichtung 92 ist ausgebildet, um aus dem Steuerbefehl 88, der möglicherweise eine Sollbewegung des 104 Fahrzeugs anzeigt, einen Soll-Bewegungsbeitrag 84für das Fahrzeug zu bestimmen und um aus dem Soll-Bewegungsbeitrag 84 eine Ansteuerung 106 des zugeordneten Aktuators zu bestimmen. Während der Steuerbefehl 88 für alle Antriebseinrichtungen 78₁ bis 78₃ des Fahrzeugs 18 beispielsweise gleich sein kann, kann auch die bestimmte Sollbewegung 104 in allen dezentralen Antriebseinrichtungen beziehungsweise dezentralen Berechnungseinrichtungen 92 identisch sein. Die hieraus abgeleiteten Ansteuerungen 106 können jedoch in den unterschiedlichen Antriebseinrichtungen 78₁ bis 78₃ voneinander verschieden sein, etwa basierend auf der Kenntnis oder Berücksichtigung des Orts der dezentralen Antriebseinrichtung bzw. des Aktuators am Fahrzeug.

Die dezentrale Berechnungseinrichtung 78 ist ferner ausgebildet, um eine Abweichung von dem Fahrtvektor zu bestimmen, etwa indem die dezentrale Berechnungseinrichtung 92 eine Information über eine Istbewegung 108 des Fahrzeugs erhält, die bspw. dadurch erhalten werden kann, indem der tatsächliche Bewegungsbeitrag bestimmt wird. Die dezentrale Berechnungseinrichtung 92 ist ferner ausgebildet, um bei einer Abweichung zwischen dem Soll-Bewegungsbeitrag 84 und der Istbewegung 108 bzw. dem Ist-Bewegungsbeitrag oder tatsächlichen Bewegungsbeitrag Maßnahmen einzuleiten, um die Abweichung von dem Fahrtvektor zu korrigieren. Eine solche Maßnahme kann hierzu eine Anweisung an sich selbst enthalten, beispielsweise eine Anpassung der Ansteuerung 106 zur Veränderung einer Geschwindigkeit und/oder einer Richtung des eigenen Bewegungsbeitrags. Alternativ oder zusätzlich kann die Antriebseinrichtung 78, beispielsweise durch die dezentrale Berechnungseinrichtung 92 eine Anweisung 114 an eine oder mehrere andere Antriebseinrichtungen senden, die eine Anweisung enthält, deren Ansteuerung anzupassen. Dies kann eine explizite Instruktion sein, aber auch eine Information, die an der anderen Antriebseinrichtung einen Rückschluss auf die dort auszuführenden Korrekturmaßnahmen erlaubt. Beispielsweise kann die Anweisung 114 Informationen über einen Korrekturvektor enthalten, der eine Abweichung zwischen der Sollbewegung 104, beispielsweise als Vektor betrachtet, und der Istbewegung 108, die ob der obigen Ausführungen mit dem tatsächlichen Bewegungsbeitrag synonym ist, beispielsweise als Vektor betrachtet, enthält.

Hierdurch kann die Abweichung in hohem Maße reduziert oder kompensiert werden, zumindest aber teilweise reduziert werden, was bereits eine Verbesserung ist. Die dezentrale Berechnungseinrichtung kann ausgebildet sein, um aus dieser Information einen Korrekturvektor für einen die Sollbewegung repräsentierenden Fahrtvektor zu erhalten, und um die Ansteuerung basierend auf einer Kombination des Fahrtvektors mit dem Korrekturvektor auszuführen, um die Ansteuerung anzupassen. Das bedeutet eine derart angepasste Ansteuerung kann bereits korrigiert sein, um den Fehler zumindest in Teilen zu kompensieren. Dies kann ohne Einschränkungen basierend auf dem lokalen Fahrtvektor als auch auf dem globalen Fahrtvektor, der anders als der die Bewegung der dezentralen Antriebseinrichtung beschreibenden lokalen Fahrtvektor den Fahrtvektor des Fahrzeugs beschreiben kann, erfolgen.

Die dezentrale Antriebseinrichtung 78 kann gemäß Ausführungsbeispielen eine der Antriebseinrichtung 78 zugeordnete Sensoreinrichtung 112 aufweisen, die es im Fahrzeug 18 ermöglicht, dezentral in den Antriebseinrichtungen 78₁ bis 78₃ die Bewegung der mobilen Vorrichtung zu erfassen, und die Abweichung von dem tatsächlichen Bewegungsbeitrag von dem Soll-Bewegungsbeitrags basierend auf der dezentral bestimmten Bewegung zu bestimmen. Beispielsweise kann die Sensoreinrichtung optische Sensoren umfassen, insbesondere einen optischen Flusssensor beziehungsweise einen Sensor zum Erfassen eines optischen Flusses, etwa einer Bildsequenz. Der optische Fluss kann als Vektorfeld der in einer Bildebene projizierten Geschwindigkeit von sichtbaren Punkten des Objektraums im Bezugssystem der Abbildungsoptik verstanden werden, das bedeutet, eine Verschiebung von Punkten in sequenziell aufgenommenen Bildern kann Rückschlüsse über die Geschwindigkeit ermöglichen. Hierbei ist anzumerken, dass die Ergebnisse der Sensoreinrichtung 112 möglicherweise Ergebnisse liefern, die für den Ort der Sensoreinrichtung 112 und mithin der Antriebseinrichtung gültig sind, beispielsweise aber von einem gesamten Bewegungsvektor der Bewegung 14 basierend auf einer Abweichung von einem geometrischen Mittelpunkt des Fahrzeugs 18 abweichen können. Ungeachtet dessen kann die Antriebseinrichtung ausgebildet sein, um die Bewegung unter Verwendung der Sensoreinrichtung 112 und insbesondere des optischen Flusssensors zu bestimmen. Eine Abweichung beziehungsweise Beeinflussung des Sensorsignals basierend auf der lokalen Position kann insofern sogar wünschenswert sein, da hierdurch präzise Angaben erhalten werden können, wie die Ansteuerung vor Ort, innerhalb der Antriebseinrichtung 78 anzupassen ist.

Manche der verwendeten Sensoren können dabei eine geteilte Ressource sein, d. h., ein geteilter Sensor für mehrere Sensoreinrichtungen 112. So kann bspw. der optische Fluss Informationen für mehrere dezentrale Antriebseinrichtungen liefern, während eine Drehzahlüberwachung dezentral erfolgt, da die Information dezentral vorliegt.

Beispielhaft kann die dezentrale Berechnungseinrichtung erkennen, dass die Drehzahl eines Rades von einem Wert wie in dem Soll-Bewegungsbeitrag angestrebt und/oder mittels der zugeführten Energie, etwa elektrischer Strom erwartet, abweicht was bspw. ein Hinweis auf einen Schlupf oder andere Effekte des Rades sein kann. Alternativ oder zusätzlich kann ein optischer Sensor anzeigen, dass die tatsächlich erreichte lokale Geschwindigkeit in Betrag und/oder Richtung von dem Soll-Bewegungsbeitrag abweicht.

Die Antriebseinrichtung 78 kann ausgebildet sein, um die Abweichung, basierend auf einer Drehzahl des dezentralen Aktuators 94, einer Stromaufnahme des dezentralen Aktuators 94, die direkt als Strom oder indirekt, beispielsweise über eine elektrische Spannung oder dergleichen, gemessen werden kann, und/oder der Bewegung, etwa erfasst über die Sensoreinrichtung 112, zu bestimmen. So kann die Drehzahl des dezentralen Aktuators in Kombination mit der Leistungsaufnahme oder Stromaufnahme des dezentralen Aktuators bereits einen Hinweis darauf geben, ob die bereitgestellte Leistung im gewünschten Umfang in eine Drehzahl umgesetzt wird und/oder ob die erhaltene Drehzahl in der gewünschten Bewegung des Fahrzeugs mündet. Es können somit mehrere Fehlerursachen gleichzeitig überwacht werden.

Zusammengenommen kann jede der dezentralen Berechnungseinrichtungen ausgebildet sein, um eine Abweichung des von dem zugeordneten Aktuator bereitgestellten Bewegungsbeitrags zu der Sollbewegung insgesamt und/oder bezüglich des Soll-Bewegungsbeitrages festzustellen, und um die Abweichung an andere Antriebseinrichtungen der Vielzahl omnidirektionaler Antriebseinrichtungen zu übermitteln. Im Beispiel des oben erläuterten Schlupfes kann dies bspw. eine Anweisung enthalten, die Antriebsleistung zurückzunehmen, um eine Veränderung der tatsächlichen Trajektorie gegenüber der Sollbewegung zu reduzieren oder zu vermeiden. Eine derartige Anweisung kann bspw. so ausformuliert sein, dass eine Information, etwa ein Korrekturvektor, eine Information an die anderen Antriebseinrichtungen enthalten kann, der so ausgestaltet ist, dass der draus abgeleitete Beitrag für die erstellende dezentrale Antriebseinrichtung innerhalb der Grenzen ist, die die dezentrale Antriebseinrichtung aktuell zu leisten vermag. Dies ermöglicht dort eine adäquate Reaktion auf diese Abweichung. Alternativ oder zusätzlich wird ermöglicht, dass die verbleibenden Antriebseinrichtungen über die eigene Abweichung informiert werden und bereits frühzeitig auf diesen Fall reagieren können, etwa indem die dezentrale Berechnungseinrichtung feststellt, dass die bereitgestellte Antriebsleistung oder elektrischer Strom nicht zu einer gewünschten Drehzahl und/oder Geschwindigkeit führt. Insbesondere die Kenntnis über die eigene Ansteuerung ist lokal vorhanden und kann bereits dort auf Abweichungen evaluiert werden.

Entsprechend sind Antriebseinrichtungen ausgebildet, um eine entsprechende Information zu empfangen, die eine Abweichung zwischen einer Sollbewegung und einem von einer anderen Antriebseinrichtung erzeugten Bewegungsbeitrag angibt. Die dortige dezentrale Berechnungseinrichtung kann ausgebildet sein, um die Ansteuerung des zugeordneten Aktuators basierend auf der Abweichung der anderen Antriebseinrichtung anzupassen.

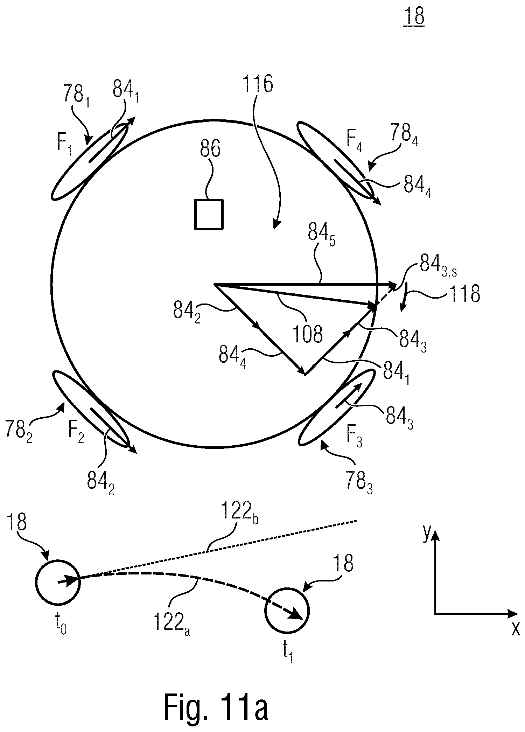

Fig. 11a zeigt eine schematische Draufsicht auf ein Sortierfahrzeug 18 gemäß einem Ausführungsbeispiel im Zusammenhang mit der individuellen Ansteuerung der Antriebseinrichtungen 78. Das Fahrzeug 18 umfasst beispielhaft vier symmetrisch angeordnete Antriebseinrichtungen 78₁ bis 78₄, um eine omnidirektionale Bewegung des Fahrzeugs 18 zu ermöglichen. Zum Erreichen einer gewünschten Bewegung 82ₛ vermittels über einer Übermittlung geeigneter Steuerbefehle durch die Steuereinrichtung 86 erfolgt eine Ansteuerung der Antriebseinrichtungen 78₁ bis 78₄. Die Bewegungsbeiträge 84₁ bis 84₄ sind beispielhaft dargestellt als Kraftvektoren F₁, F₂, F₃ bzw. F₄. Fig. 11a zeigt dabei einen Fehlerfall, in welcher beispielsweise die Antriebseinrichtung 78₃ einen fehlerhaften Bewegungsbeitrag 84₃ liefert, der in dem dargestellten Kräftediagramm 116 dazu führt, dass die tatsächliche Istbewegung 108 von der Sollbewegung 82ₛ abweicht, und zwar beispielhaft, um die Abweichung zwischen dem gewünschten Bewegungsbeitrag 84_{3,s}, der Sollgröße und dem tatsächlichen Bewegungsbeitrag 84₃. Dieser führt zu einer Abweichung 118, welche die tatsächliche Richtung und Geschwindigkeit des Fahrzeugs 18 ändert, was ohne Korrektureingriff zu einer abweichenden Trajektorie 122ₐ des Fahrzeugs 18 vom dargestellten Zeitpunkt T₀ zum nächsten Zeitpunkt T₁, etwa das nächste Regelintervall, und verglichen mit einer Solltrajektorie 122ₛ führen würde.

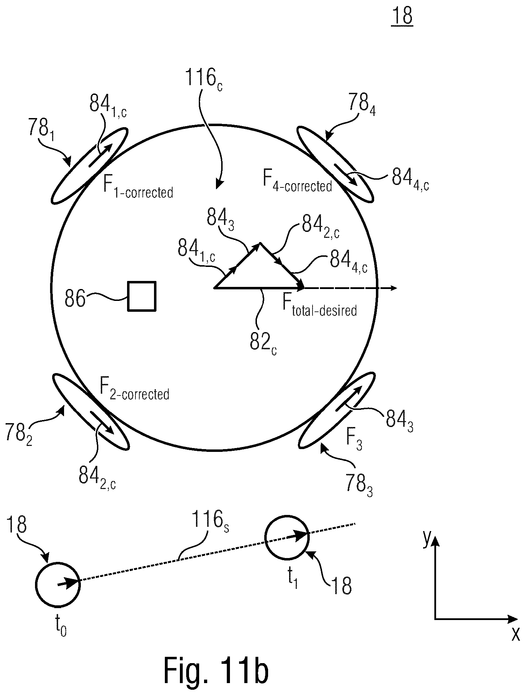

Fig. 11b zeigt eine mögliche Wirkung der hierin beschriebenen Ausführungsbeispiele. So erlangen beispielsweise die anderen Antriebseinrichtungen 78₁, 78₂ und 78₄ Kenntnis von der Abweichung der Antriebseinrichtung 78₃ und können basierend hierauf ihre eigene Ansteuerung anpassen, was in korrigierten Ansteuerungen und somit korrigierten Bewegungsbeiträgen 84_{1,c}, 84_{2,c} und 84_{4,c} resultieren kann, die an den fehlerhaften Bewegungsbeitrag 84₃ angepasst sind.

So können beispielsweise die entsprechenden Kraftvektoren in ihrem Betrag reduziert werden, um bei einem Kraftvektor F₁-corrected, F₂-corrected und F₄-corrected (corrected = korrigiert) anzugelangen, so dass das korrigierte Kräftediagramm 116_{c} immerhin die gewünschte Richtung in der erhaltenen Bewegung 82_{c} beibehalten kann, wenngleich möglicherweise in verlangsamter Fahrt. Dies ermöglicht einen Verbleib des Fahrzeugs 18 auf der Solltrajektorie 122ₛ, auch wenn möglicherweise eine Geschwindigkeit reduziert ist. Da die Korrektur lokal vorgenommen werden kann, erfolgt zumindest im Vergleich zu einer zentralisierten Ansteuerung eine möglicherweise verringerte Abweichung von der Solltrajektorie.

Es wird deutlich, dass die Vielzahl von omnidirektionalen Antriebseinrichtungen eine dezentrale Antischlupfregelung für das Antriebssystem bereitstellen können. Obwohl in der Darstellung der Fig. 11b eine Kraftreduzierung in den anderen Antriebseinrichtungen 78₁, 78₂ und 78₄ erfolgt, kann gemäß anderen Ausführungsbeispielen auch eine Richtungsänderung erfolgen, beispielsweise wenn dies für eine durchzuführende Rotation oder dergleichen erforderlich ist.

Gemäß Ausführungsbeispielen ist jede der dezentralen Berechnungseinrichtungen der Antriebseinrichtung ausgebildet, um eine Abweichung der von dem zugeordneten Aktuator bereitgestellten Bewegungsbeitrag zu der Sollbewegung festzustellen, und um für ein nachfolgendes Zeitintervall die Ansteuerung des zugeordneten Aktuators basierend auf der Abweichung zu ändern, um die Abweichung zu reduzieren. Das nachfolgende Zeitintervall kann basierend auf den Regelungszyklen in den dezentralen Antriebseinrichtungen verhältnismäßig kurz sein und insbesondere kürzer als die Regelungszyklen der Steuereinrichtungen 86, für die beispielsweise zwischen den Zeitpunkten T₀ und T₁ Zeiträume von beispielsweise 20 Millisekunden vergehen können. Die dezentralen Antriebseinrichtungen können demgegenüber in Zeitintervallen betrieben werden, die beispielsweise geringer sind als der Regelungszyklus der zentralen Steuereinrichtung 86, etwa höchstens 10 ms, höchstens 5 ms oder höchstens 1 ms oder weniger. Das bedeutet, dass die dezentrale Regelung um einen Faktor von zumindest 2, zumindest 4 oder zumindest 20 schneller sein kann als die zentrale Steuerung, was auch gelten kann, wenn die zentrale Steuerung mit einem anderen Intervall betrieben wird.

Die dezentralen Berechnungseinrichtungen können ausgebildet sein, um einen Korrekturvektor für einen die Sollbewegung repräsentierenden Fahrtvektor zu bestimmen, und um die Ansteuerung basierend auf einer Kombination des Fahrtvektors mit dem Korrekturvektor auszuführen, um die Abweichung zu reduzieren, wie es beispielsweise anhand der Kräftediagramme 116 und 116_{c} dargestellt ist.

In anderen Worten ist ein Aspekt hierin beschriebener Ausführungsbeispiele darauf begründet, dass in hochautomatisierten Fahrzeugen heutzutage viele Teilsysteme einen eigenen Computer darstellen oder als solcher implementiert sind. In der Entwicklung ist es häufig einfacher und deswegen ausgeführt, einen programmierbaren Mikrocontroller oder dergleichen zu verwenden, als nur für einen bestimmten Zweck eine Analog-/Digitalschaltung zu entwickeln. So entstehen möglicherweise ungenutzte Ressourcen, da die Mikrocontroller üblicherweise überdimensioniert werden. Diese ungenutzten Ressourcen können für die Implementierung hierin beschriebener Ausführungsbeispiele verwendet werden. So bezieht sich beispielsweise ein entsprechendes Verfahren zum Betreiben eines Fahrzeugs mit einem omnidirektionalen Antriebssystem, das ausgebildet ist, um eine Bewegung des Fahrzeugs bereitzustellen, wobei das omnidirektionale Antriebssystem eine Vielzahl von omnidirektionalen Antriebseinrichtungen aufweist und jede der Vielzahl omnidirektionaler Antriebseinrichtungen eine dezentrale Bewegungseinrichtung und einen zugeordneten, zum Bereitstellen eines Bewegungsbeitrags für die Bewegung eingerichteten Aktuator aufweist, die Schritte eines Bereitstellens eines Steuerbefehls an das omnidirektionale Antriebssystem, der eine Anweisung zur Ausführung der Bewegung enthält, ein Bestimmen einer Sollbewegung für das Fahrzeug mit jeder der dezentralen Berechnungseinrichtungen, ein Bestimmen einer Ansteuerung des zugeordneten Aktuators aus der Sollbewegung mit jeder der dezentralen Berechnungseinrichtungen und ein Bestimmen und Korrigieren einer Abweichung von dem Fahrtvektor mit jeder der dezentralen Berechnungseinrichtungen.

In den beschriebenen autonomen Fahrzeugen, etwa dem Fahrzeug 18 und/oder 18, ist beispielsweise jede Antriebseinheit mit einem Mikrocontroller, der Berechnungseinrichtung 92, ausgestattet. Dieser kann die Ansteuerung des Motors/Aktuators und die Messung aller relevanten Werte des jeweiligen Antriebs übernehmen. Ziel ist es, eine definierte Bahnkurve zu verfolgen. Des Weiteren kommunizieren die zentrale Regeleinheit, die Steuereinheit 86 und alle Antriebseinheiten über einen seriellen Bus, etwa das Bus-System, miteinander.

Sollte es nun dazu kommen, dass ein Antrieb den gewünschten Fahrtvektor nicht einhalten kann, so würden in einem konventionellen Verfahren erst im nächsten Regelzyklus die relevanten Werte und die Abweichung berücksichtigt werden. Ein potenzieller Fehler summiert sich daher bis zum nächsten Regelzyklus auf.

In erfindungsgemäßen Fahrzeugen und/oder Verfahren übermittelten gegen die zentrale Regelung eine komplexere Anweisung. Anstatt der Stellwerte, die an jedem Antrieb separat übermittelt werden, wird mit nur einem Paket, etwa per Broadcast, der gewünschte Fahrvektor an alle Antriebe gleichzeitig übermittelt. Dies führt bereits zur ersten Latenzeinsparung. Sollte es nun dazu kommen, dass ein Antrieb den gewünschten Fahrtvektor nicht einhalten kann, sendet die betroffene Antriebseinheit sofort einen Korrekturvektor. Dies ist insbesondere möglich, da jede Antriebseinheit über die gleichen Sensoren verfügt und gleichzeitig ein Messpunkt für alle hochdynamisch relevanten Werte ist. Eine Abweichung wird ermittelt durch den Drehzahlverlauf, Stromverlauf und die tatsächliche Bewegung über den Boden. Die Bewegung wird mithilfe eines optischen Flusssensors in der Fahrebene (X, Y) gemessen. Dadurch kann jede Antriebseinheit, unter Annahme des Fahrtvektors und somit Annahme der Bewegung der anderen Antriebseinheiten, zusätzlich nicht nur die eigene Abweichung feststellen, sondern auch eine Aufholkorrektur ermitteln. Diese Information wird sofort bzw. nächstmöglich per Broadcast an alle weiteren Antriebseinheiten übermittelt. Die anderen Antriebseinheiten übernehmen daraufhin den Korrekturvektor und passen ihre eigene Ansteuerung an.

Eine derartige Korrektur ist zu einem jeweiligen Zeitpunkt eine gute bis bestmögliche Maßnahme. Eine derartig schnelle Reaktion hat zur Folge, dass die Abweichung im Vergleich zum konventionellen Verfahren geringer ausfällt, wie es anhand des Vergleichs zwischen Fig. 11a und Fig. 11b ersichtlich ist. Der resultierende Fahrtvektor hat dadurch annähernd die gleiche Orientierung bzw. lediglich geringe Abweichungen, wodurch die Bahnkurve nicht wesentlich verlassen wird oder nicht verlassen wird. Dieser Ablauf kann so lange stattfinden, bis der nächste Regelzyklus stattfindet, in welchem beispielsweise die Steuereinrichtung 86 eine übergeordnete Gegenmaßnahme ergreifen kann. Das bedeutet, gemäß einem Ausführungsbeispiel sind die omnidirektionalen Antriebseinrichtungen ausgebildet, um die Abweichung zwischen zwei Regelungsschritten der Steuerungseinrichtung 86 zu korrigieren. Optional kann die Steuerungseinrichtung 86 dann selbst eine globale Korrektur vornehmen, die den aufgetretenen Fehlerfall berücksichtigt.

Ausführungsbeispiele ermöglichen es, dass eine Möglichkeit bereitgestellt wird, eine effektive Antischlupfregelung für Fahrzeuge mit Allseitenrädern zu bieten, insbesondere mit Verwendung optischer Flusssensoren, bei der allerdings der Kurs oder die Richtung des Fahrzeugs maximal beibehalten wird. Würde man im Gegensatz dazu die durchdrehenden Räder einzeln abbremsen, so würde sich der Fahrtvektor verziehen oder verfälschen, was letzten Endes eine Störung im Regelkreis erzeugt, die ausgeregelt werden müsste, wofür die Steuerungseinrichtung 86 zuständig wäre, welche jedoch Latenzen aufweist. Des Weiteren bietet diese Methode eine Regelung mit kleinerer Latenz, da etwaige Störungen direkt auf den Prozessoren der Motor-Steuerungseinheiten, der Antriebseinrichtungen, verarbeitet werden können, insbesondere, wenn die Steuereinheiten aller Motoren über ein Bus-System, etwa CAN, miteinander verbunden sind.

Ausführungsbeispiele können vor allem in Fahrzeugen mit einzeln angetriebenen Rädern implementiert werden. Insbesondere omnidirektionale Fahrzeuge mit Allseitenrädern sind hier besonders hervorzuheben, da hier die Räder immer einzeln angetrieben werden. Betroffen sind insbesondere Anwendungsgebiete, welche eine hohe Fahrzeugdynamik erfordern, etwa Sortieranlagen mit Robotern.

Das bedeutet, dass in einem Sortiersystem zumindest ein Sortierfahrzeug ein omnidirektionales Antriebssystem aufweist, das ausgebildet ist, um eine Bewegung des Fahrzeugs bereitzustellen. Das omnidirektionale Antriebssystem weist eine Vielzahl von omnidirektionalen Antriebseinrichtungen auf, wobei jede der Vielzahl ominidirektionaler Antriebseinrichtungen eine dezentrale Berechnungseinrichtung und einen zugeordneten, zum Bereitstellen eines Bewegungsbetrags für die Bewegung eingerichteten Aktuator aufweist. Ferner ist eine Steuereinrichtung 86 in dem Fahrzeug zum Bereitstellen eines Steuerbefehls an das omnidirektionale Antriebssystem vorgesehen, der eine Anweisung zur Ausführung der Bewegung enthält. Jede der dezentralen Berechnungseinrichtungen kann ausgebildet sein, um eine Sollbewegung für das Fahrzeug zu bestimmen, und um aus der Sollbewegung für einen Soll-Bewegungsbeitrag eine Ansteuerung des zugeordneten Aktuators zu bestimmen, und um eine Abweichung zwischen dem Soll-Bewegungsbeitrag und einem tatsächlichen Bewegungsbeitrag zu bestimmen und eine Korrektur basierend auf der Abweichung auszuführen.

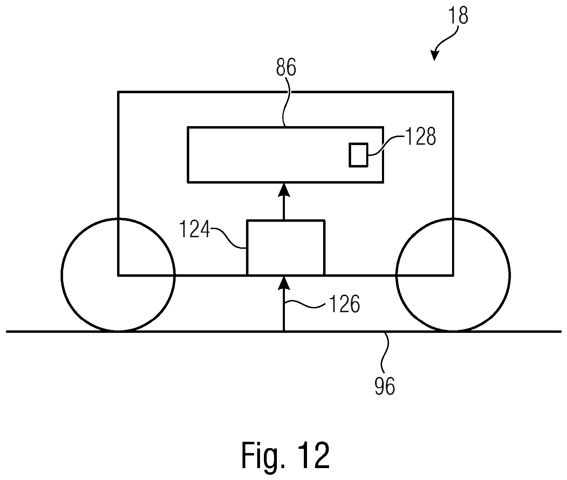

Weitere Ausführungsbeispiele beziehen sich darauf, dass das Sortierfahrzeug 18, wie es beispielsweise im Zusammenhang mit der Fig. 12 beschrieben ist, ausgebildet ist, um mittels einer Erfassungseinheit 124 des Sortierfahrzeugs 18 eine Bodenbeschaffenheit der Oberfläche 96 zu erfassen. Hierzu kann beispielsweise eine Mustergestaltung, Farbgestaltung oder Oberflächenbeschaffenheit dienen, die in Ausführungsbeispielen zufällig in der Oberfläche 96 verteilt sein kann. Beispielsweise können hierunter sogenannte Farbsprenkler dienen, die einzeln aber auch in Kombination mit Farbsprenklern ihrer Nachbarschaft bezüglich ihrer Form, Orientierung und/oder relativer Außenrichtung zumindest in Teilbereichen eindeutige Positionsinformationen für das Sortierfahrzeug 18 liefern können, um eine Orientierung und/oder Positionierung des Sortierfahrzeugs 18 in dem Sortiersystem 100 zu ermöglichen. Eine Erfassung 126 kann mittels geeigneten Abgleichs in einer möglicherweise in dem Sortierfahrzeug 18 vorgesehenen oder vermittels drahtloser Kommunikation zugänglicher Datenbank 128 abgeglichen werden. Hierzu ist es nötig, dass zuvor eine Kartographierung des Untergrunds 96 ausgeführt wurde. Um die Zuverlässigkeit der Positionierung zu erhöhen ist es ebenfalls möglich, die Positionierung des Sortierfahrzeugs in dem Sortiersystem 100 darauf zu basieren, eine Historie der Bewegung des Fahrzeugs 18 zu berücksichtigen. So kann beispielsweise, im Falle von Mehrdeutigkeiten, ein Ausschluss sehr unwahrscheinlicher Positionen durchgeführt werden, wenn von einem vorangehenden Schritt der Positionsbestimmung zu einem aktuellen eine ungewöhnlich große oder gar unmögliche Distanz zurückgelegt werden müsste, während ein anderer in Betracht kommender Treffer in der Datenbank sehr nahe positioniert ist. Die Fahrzeugsteuerung 86 kann ausgebildet sein, um die Route durch das Sortiersystem 18 basierend auf einer derartigen Positionierung auszuführen, was es ermöglicht, eine externe Einrichtung zur Orientierung, etwa vermittels QR-Codes oder dergleichen oder anderen Markierungen auf dem Boden, zu vermeiden.

Ein derartiges Sortierfahrzeug kann eine Verarbeitungseinheit, etwa die Steuereinrichtung 86 aufweisen, die ausgebildet ist, um eine von der Erfassungseinheit bereitgestellte Abtastinformation von einer Abtastung einer Oberfläche 96 zu erhalten, wobei die Abtastinformation eine Information über ein inhärentes Merkmal der Oberfläche aufweist. Die Verarbeitungseinheit kann ausgebildet sein, um das inhärente Merkmal aus der Abtastinformation zu extrahieren und basierend auf der Extraktionsinformation einen Abgleich mit einer Datenbank, etwa der Datenbank 128, auszuführen, wobei in der Datenbank Extraktionsinformationen für eine Vielzahl von inhärenten Merkmalen der Oberfläche hinterlegt sind. Basierend auf dem Abgleich kann die Verarbeitungseinheit die Position der Erfassungseinheit in dem Sortiersystem bestimmen.

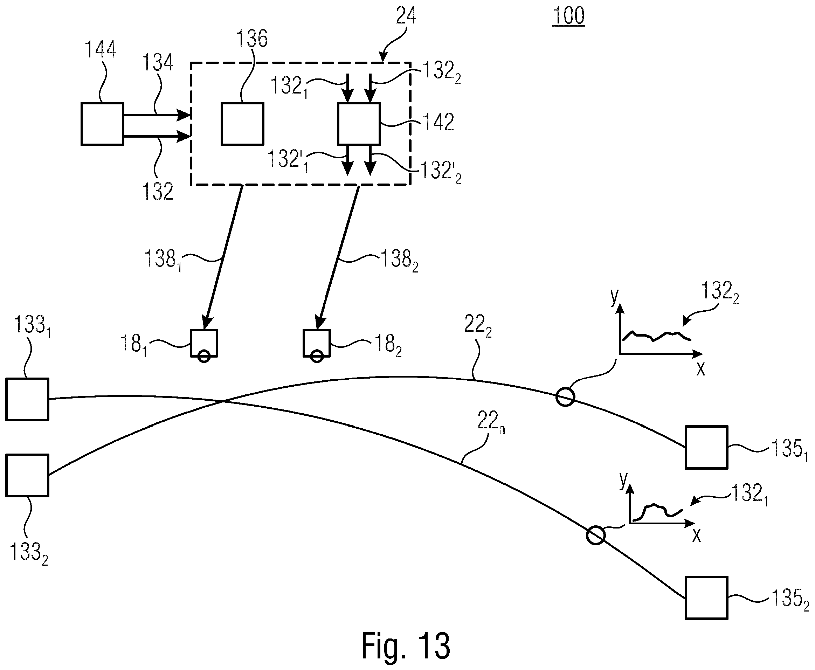

In einem weiteren Ausführungsbeispiel ist die Steuerung 24 des Sortiersystems ausgebildet, um eine Routenplanung so auszugestalten, dass die Fahrzeuge möglichst schnell durch das Sortiersystem fahren, wozu eine Kollision beziehungsweise mögliche Kollision mit anderen Sortierfahrzeugen vorab berücksichtigt wird und eine möglicherweise Maximalgeschwindigkeit eines Sortierfahrzeugs zumindest stellenweise oder zeitweise reduziert wird, um eine Kollision zu vermeiden und/oder eine andere Trajektorie gewählt wird, die dafür dann aber mit einer vergleichsweise hohen Geschwindigkeit durchfahrbar ist, etwa um ein globales oder zumindest lokales Maximum an möglichen Geschwindigkeiten beziehungsweise Minimum von Zustelldauern zu ermöglichen. Wird beispielsweise die Fig. 13 betrachtet, die eine beispielhafte schematische Darstellung des Sortiersystems 100 darstellt, so kann für die Wahl der Trajektorien 22 eine Funktion der Steuerungseinrichtung 24 auch darin bestehen, ein Geschwindigkeitsprofil 132 zusätzlich zu einer reinen Routeninformation 134 bereitzustellen.

Das Sortiersystem 100 kann eine Koordinierungseinrichtung 136 aufweisen, die ausgebildet ist, um Fahrtaufträge 138₁ und 138₂ an die Fahrzeuge 18₁ und 18₂ zu übermitteln. Jeder der Fahrtaufträge 138₁ und 138₂ kann eine Fahrt von einem der Startpunkte, etwa Einschleusepunkte 133 zu einem der Endstellen 135 der Trajektorie entlang einer Trajektorie 22 beschreiben. Als Teil dieser Fahrtaufträge kann auch eine Geschwindigkeitsvorgabe übermittelt werden, die von einer Kollisionsvermeidungseinrichtung 142 so modifiziert werden, um eine modifizierte Geschwindigkeitsvorgabe 132'₁ und/oder 132'₂ zu erhalten, die es ermöglichen, dass die Fahrzeuge kollisionsfrei durch das Sortiersystem 100 fahren, auch auf einander kreuzenden Routen oder Trajektorien.

Die Steuerungseinrichtung 24 kann ausgebildet sein, um dynamische Routen für die Fahrtaufträge zu bestimmen und an die Fahrzeuge 18 zuzuweisen. Alternativ kann auch eine statische Zuweisung erfolgen, wobei dennoch die Steuerungseinrichtung 24 die Fahrtaufträge zum Transport von Sortiergut (Transportaufträge) oder von Werkzeugen oder auch andere Fahrtaufträge, etwa für Leerfahrten vermittels der Sortierfahrzeuge an die Fahrzeuge zuweist.

Die Steuerungseinrichtung 24 kann ausgebildet sein, um die Transport- oder Fahrtaufträge vermittels einer Verhandlung zu vergeben, in welcher die unterschiedlichen Transporte und/oder Sortierfahrzeuge in Konkurrenz oder unterschiedlichen Verhandlungspositionen zueinanderstehen. So kann die Steuerungseinrichtung 24 beispielsweise ausgebildet sein, um für die Verhandlung zumindest eines aus einer Zeitdauer bis zur Aufnahme des Sortierguts durch ein Sortierfahrzeug, etwa beeinflusst durch eine Distanz zwischen beiden Elementen, eventuellen Wartezeigen und/oder einer möglichen Geschwindigkeit, einer Zeitdauer bis zur Abgabe des Sortierguts durch ein Sortierfahrzeug, eine verbleibende Batterieleistung eines Sortierfahrzeugs, eine Zeitdauer bis zu einer nächsten Batterieladung eines Sortierfahrzeugs, eine Transportkapazität eines Sortierfahrzeugs und/oder einer Anzahl mit einem Sortierfahrzeug noch koppelbarer Anhänger und/oder bereits gekoppelter Anhänger zu berücksichtigen, etwa da zusätzliche Anhänger zu erhöhtem Energiebedarf und/oder langsameren Fahrten führen können. In anderen Worten können die Sortierfahrzeuge beziehungsweise ihnen zugehörige Softwareagenten oder Einrichtungen verhandeln. Kriterien oder Hauptkriterien oder Argumente können dabei anfallende Kosten sein, die wiederum im Wesentlichen den erforderlichen Zeitbedarf beeinflussen können, der entstehen würde, wenn ein Fahrzeug bis zur Abholung des vergebenden Transportauftrages oder Startpunkt eines Fahrtauftrages fahren würde, wobei hierbei optional noch zuvor zu erledigende Fertigstellungen eines noch bestehenden Auftrages berücksichtigt werden können. Zusätzliche Kriterien können beispielsweise eine verbleibende Akkukapazität bis zur nächsten Aufladung sein und/oder im Falle der Verwendung von Anhängern eine Anzahl bereits angekoppelter Anhänger, da eine höhere Anzahl von Anhängern als schlechter interpretiert werden kann, weil eine langsamere Geschwindigkeit und/oder ein größeres Hindernis dadurch erzeugt wird, das bedeutet, das Gebilde aus Sortiergutfahrzeug und Anhängern wird im Sortiersystem sperriger.

Zumindest eine Teilmenge von Sortierfahrzeugen kann ausgebildet sein, um sich in dem Sortiersystem entlang von Trajektorien zu bewegen. Die Steuerungseinrichtung 24 kann eine Berechnungseinrichtung aufweisen, die ausgebildet ist, um zwischen einer Anzahl von Startpunkten und einer Anzahl von Endpunkten eine Anzahl von Trajektorien zu berechnen, wobei jede Trajektorie eine Geschwindigkeitsvorgabe für ein Sortierfahrzeug entlang der Trajektorie zugeordnet ist. Die Steuerungseinrichtung 24 kann eine Koordinierungseinrichtung aufweisen, die ausgebildet ist, um Fahrtaufträge an die Mehrzahl von Sortierfahrzeugen zu übermitteln, wobei jeder Fahrtauftrag eine Fahrt von einem der Startpunkte zu einem der Endpunkte entlang einer der Trajektorien umfasst. Die Steuerungseinrichtung 24 kann eine Kollisionsvermeidungseinrichtung 136 aufweisen, die ausgebildet ist, um für einen neuen Fahrtauftrag eine Trajektorie auf mögliche Kollisionen mit einem weiteren Sortierfahrzeug des Sortiersystems zu untersuchen, um eine Kollisionsinformation zu erhalten, die eine mögliche Kollision anzeigt. Die der Trajektorie zugeordnete Geschwindigkeitsvorgabe 132 kann basierend auf der Kollisionsinformation verändert werden, um eine veränderte Geschwindigkeitsvergabe 132' zu erhalten, womit die mögliche Kollision vermieden wird. Das Sortiersystem kann ausgebildet sein, um den neuen Fahrtauftrag umfassend eine Instruktion, die die Trajektorie und die veränderte Geschwindigkeitsvorgabe umfasst, an eine Steuerung des Sortierfahrzeugs zu übermitteln. Hierdurch wird ebenfalls ermöglicht, dass bereits bestehende oder ausgeführte Fahrtaufträge nicht mehr verändert werden, möglicherweise auch nicht in Bezug auf die Geschwindigkeitsvorgabe. Eine Berechnungseinrichtung 144 kann ausgebildet sein, um die Trajektorien 22 zu berechnen. An dieser Stelle wird darauf hingewiesen, dass ein Startpunkt einer Trajektorie zwar ein Einschleusepunkt sein kann, dass eine Fahrt zwischen einem Einschleusepunkt und einer Endstelle aber auch mehrere Trajektorien und somit auch mehrere Startpunkte und Endstellen aufweisen kann.

Zwischen einem bestimmten Startpunkt 133 und einem speziellen Endpunkt 135 kann die Berechnungseinrichtung 144 eine, aber auch mehrere Trajektorien berechnen. Diese können beispielsweise als sogenannte Splines berechnet werden. Mehrere Trajektorien können es ermöglichen, mehrere Fahrtaufträge parallel abzuwickeln, alternativ oder zusätzlich kann es möglich sein, eine Alternativroute zur Verfügung zu haben, sollte auf eine Kollision reagiert werden müssen.

Gemäß einem weiteren vorteilhaften Ausführungsbeispiel sind die Sortierfahrzeuge 18 des Sortiersystems 100 ausgebildet, um miteinander zu kommunizieren und/oder zumindest ein Signal auszusenden, welches von anderen Sortierfahrzeugen empfangen werden kann, entweder zum Informationsaustausch und/oder zur Positionierung. So kann beispielsweise ein räumlicher Bereich des Sortiersystems, welcher von den Sortierfahrzeugen befahren wird, räumlich unterteilt werden. Es ist möglich, dass jedem dieser Teilbereiche eine Ressource eines drahtlosen Übertragungsmechanismus, beispielsweise Bluetooth, WLAN oder dergleichen zugewiesen wird und dass ein Sortierfahrzeug die Ressource seines eigenen Teilbereichs und/oder benachbarter Teilbereiche benutzt, um mitzuteilen, dass es sich in diesem Teilbereich befindet oder diesen zeitnah befahren wird. Alternativ oder zusätzlich ist es möglich, den Ressourcenraum des eigenen und/oder benachbarter Teilbereiche zu überwachen, um möglicherweise bereits frühzeitig eine mögliche Kollision zu erkennen, etwa, wenn in einem benachbarten Teilbereich ein Sortierfahrzeug liegengeblieben ist, welches eine entsprechende Information sendet, so dass das Hindernis frühzeitig erkannt werden kann.

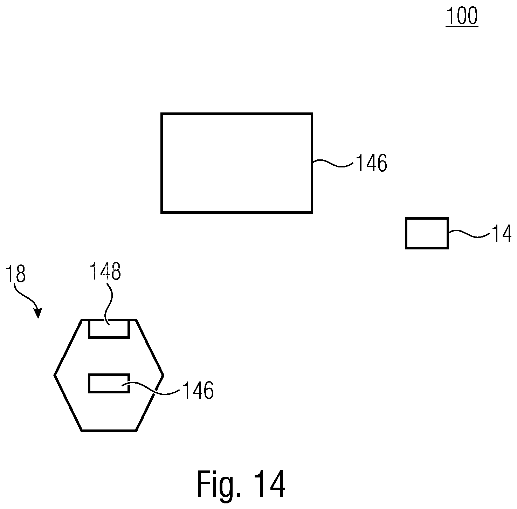

Fig. 14 zeigt eine schematische Blockdarstellung eines Teils des Sortiersystems 100 mit einer optionalen Identifikationseinrichtung 146, die ausgebildet ist, um zumindest ein Merkmal von dem Sortiergut 14 zu identifizieren und dem Sortiergut zuzuordnen. Die Identifikationseinrichtung 146 kann hierzu beispielsweise Kameras aufweisen und/oder zur drahtlosen oder funkgestützten Identifikation eingerichtet sein. Die Identifikationseinrichtung 146 kann beispielsweise ausgebildet sein, um zumindest eine Seite des Sortierguts zu einem Zeitpunkt auf das Merkmal hin abzutasten. Dies kann beispielsweise durch Abtasten mit einer Kamera erfolgen, die bei Annahme des Sortierguts als Kubus, ein, zwei oder drei Seiten gleichzeitig erfassen kann. Durch mehrere Kameras kann eine höhere Anzahl von Seiten abgetastet werden. Es ist möglich, dass die Identifikationseinrichtung eingerichtet ist, um beispielsweise bis zu fünf Seiten des Sortierguts unter Verwendung von zwei Kameras abzutasten, was eine mittels des Sortierfahrzeugs verdeckte Seite des Kubus mitumfassen kann. Es ist jedoch ebenfalls möglich, dass die Identifikationseinrichtung zumindest teilweise in dem Sortierfahrzeug implementiert ist, womit auch alle Seiten abgetastet werden können. Ein ähnlicher Effekt kann erreicht werden, wenn das Sortierfahrzeug in einem bestimmten Bereich beispielsweise transparent gebildet ist oder andere Maßnahmen implementiert werden.

Gemäß einem Ausführungsbeispiel ist die Steuerungseinrichtung 24 des Sortiersystems ausgebildet, um ein Sortierfahrzeug in eine erste relative Lage für einen ersten Merkmalserkennungsversuch zu steuern, und um bei einem ausbleibenden Erfolg des ersten Merkmalserkennungsversuchs das Sortierfahrzeug für einen zweiten Merkmalserkennungsversuch in eine zweite relative Lage zu steuern. Gemäß einem Ausführungsbeispiel kann die Steuerungseinrichtung 24 ausgebildet sein, um das Sortierfahrzeug in eine, eine Fahrzeugrotation umfassende Fahrzeugbewegung zu steuern, um von der ersten Lage in die zweite Lage zu wechseln. Es kann auch so verstanden werden, dass das Sortiergut vor der Identifikationseinrichtung gedreht wird, so dass eine höhere Anzahl von Seiten des Sortierguts abgetastet werden kann.

Gemäß einem Ausführungsbeispiel ist die Steuerungseinrichtung 24 ausgebildet, um das Sortierfahrzeug so zu steuern, dass es unter Verwendung einer Lageänderungseinrichtung das Sortiergut ausgehend von einer ersten Lage in eine veränderte zweite Lage bewegt oder umpositioniert, und um das Sortiergut der Identifikationseinrichtung mit der zweiten Lage erneut zu präsentieren. Beispielsweise kann bei einer missglückten ersten oder vorangehenden Identifikation die Lage verändert werden, beispielsweise vermittels einer Kippeinrichtung, eines Greifers oder dergleichen und der Versuch wiederholt werden.

Gemäß einem Ausführungsbeispiel ist die Identifikationseinrichtung zumindest teilweise als Teil eines Sortierfahrzeugs gebildet, das bedeutet, das Sortierfahrzeug kann zumindest einen Sensor der Identifikationseinrichtung 146 aufweisen. Es ist auch möglich, dass das Sortierfahrzeug die Identifikationseinrichtung 146 vollständig aufweist.

Gemäß einem Ausführungsbeispiel ist das Sortiersystem ausgebildet, um das Sortiergut vor einer Übergabe an ein Fahrzeug und/oder in einem Bereich eines korrespondierenden Einschleusepunktes zu identifizieren, etwa um das Sortiergut mit einem Transportauftrag (also beispielhaft ein Fahrtauftrag für eine Fahrt, während der ein Sortiergut oder ein anderes Objekt transportiert wird) zu verknüpfen und/oder um ein für den Transportauftrag zu wählendes Fahrzeug auszuwählen, etwa indem die Kennung des Sortiergutes mit einer Endstelle assoziiert ist.

Gemäß einem Ausführungsbeispiel ist die Identifikationseinrichtung 146, insbesondere in dergestalt, dass sie außerhalb eines Transportfahrzeugs angeordnet ist, transportabel in dem Sortiersystem 100 eingerichtet und ausgebildet, um zumindest in Teilen mit zumindest einem Sortierfahrzeug gekoppelt zu werden, etwa an einer Schnittstelle 148 des Sortierfahrzeugs 18. Während einer Kopplung zwischen der Identifikationseinrichtung 146 und dem Sortierfahrzeug 18 ist die Identifikationseinrichtung ausgelegt, um in dem Sortiersystem zur Identifikation von Sortiergütern 14 verwendet zu werden und/oder um transportiert zu werden. Bspw. kann die eine Identifikationsinformation, etwa eine Identifikationsnummer des Ladeguts, die bspw. durch einen Barcode oder dergleichen dargestellt werden kann, vermittels der Identifikationseinrichtung 146 ausgelesen werden. Eine Steuerung des Sortiersystems 100 kann aus der Identifikationsinformation das Sortierziel für das Sortiergut als Fahrtziel für das Sortierfahrzeug ableiten. Hierzu könnte die Identifikationsinformation prinzipiell auch eine postalische Adresse sein, aus der dann unter Zuhilfenahme einer Datenbank das Sortierziel abgeleitet wird.

Gemäß einem Ausführungsbeispiel ist zumindest eine der Endstellen 16 in dem Sortiersystem kamm-artig gebildet, um zumindest einen Aufnahmeraum 152 bereitzustellen, in welchem Sortiergut von zumindest einem Sortierfahrzeug mittels Abstreifen an der kamm-artigen Endstelle aufnehmbar ist. Die kamm-artige Struktur kann sich beispielsweise vermittels eines Rahmens und Fortsätzen 154₁ bis 154₃ in beliebiger Anzahl ≥ 1 zusammensetzen, die zusammengenommen die kamm-artige Struktur zumindest in Teilen bilden. Unter Bezugnahme auf das Sortierfahrzeug, wie es beispielsweise in den Fig. 9a bis 9d beschrieben ist, kann beispielsweise die Begrenzung bzw. der Haltebereich 64 zu den Fortsätzen 154 korrespondierende Aussparungen aufweisen, so dass die Fortsätze 154 in solche Aussparungen eingreifen können und eine Durchfahrt des Sortierfahrzeugs durch die Endstelle 16 dazu führen kann, dass die Fortsätze 154 das Sortiergut von dem Sortiergutaufnahmebereich 54 abnehmen, etwa durch ein Herausschubsen. Alternativ oder zusätzlich kann zumindest eine der Endstellen des Sortiersystems einen Aktuator zum Abnehmen eines Sortierguts von einem Sortierfahrzeug aufweisen, etwa einen Greifer oder dergleichen.

Korrespondierend kann, alternativ oder zusätzlich, zumindest eine der Einschleusepunkte kamm-artig gebildet sein, wie es bspw. in der schematischen perspektivischen Ansicht der Fig. 15 dargestellt ist, um zumindest einen Abgaberaum bereitzustellen, von welchem Sortiergut durch zumindest ein Sortierfahrzeug mittels Abstreifen von dem kamm-artigen Einschleusepunkt aufnehmbar ist. Der Bereich 152 kann in einem Bodenbereich und/oder auf einem Plateau angeordnet sein, so dass die kamm-artige Struktur beispielsweise auch für ein Aufladen des Sortierguts auf das Sortierfahrzeug benutzt werden kann, etwa um ein verglichen mit den Funktionen der Fig. 4a und 4b vergleichbares Ergebnis zu erreichen. So kann bspw. eine Ablagefläche erhöht von einer Bodenfläche vorgesehen sein, so dass ein auf der Bodenfläche bewegliches Sortierfahrzeug unter der Ablagefläche hindurchfährt und dabei ein Sortiergut von einer Ladefläche, etwa an einer Oberseite des Fahrzeugs, unter Verwendung der kamm-artigen Struktur abgestreift und damit auf die Ablagefläche positioniert wird. Hierzu kann bspw. angenommen werden, dass ein Haltebereich 64 des Sortierfahrzeugs entsprechende Aussparungen zum Eingriff der Fortsätze 154 aufweist und der Haltebereich bspw. in Fahrtrichtung voraus ausgerichtet ist, so dass das Sortiergut 14 über die Kante 62a abgestreift werden kann. Ein weiteres oder dasselbe Fahrzeug kann bspw. unter Ausnutzung einer um 180° rotierten Relativposition dieselbe Route unter der Übergabestation hindurchfahren, d. h., in dem Beispiel ist der Haltebereich 64 in Fahrtrichtung nach hinten gerichtet, womit der Haltebereich 64 das Sortiergut 14 wieder von der Ablagefläche abstreift oder mitnimmt.

Aus einer Kombination der Erläuterungen zu Fig. 15 zu einem Einschleusepunkt und einer Endstelle ergibt sich auch, dass sowohl ein Einschleusepunkt als auch eine Endstelle als Übergabestation oder Transferstation eingerichtet sein können und ausgebildet sein können, um ein Sortiergut von einem Fahrzeug zu empfangen, wobei das Sortiergut von einem anderen Sortierfahrzeug aufgenommen wird. Die Struktur gemäß der Fig. 15 kann, alternativ zu einer Verwendung eines Aktuators, passiv ausgebildet sein.

Wird jedoch eine Bewegung eines Elements an dem Einschleusepunkt, der Endstelle und/oder der Übergabestation implementiert, kann es vorteilhaft sein, eine Übergabe eines Sortierguts an ein Sortierfahrzeug an einem Einschleusepunkt durch die Steuerungseinrichtung 24 des Sortiersystems zu steuern, so dass eine Bewegung des Sortierguts in einem Bereich des Einschleusepunktes mit einer Bewegung des Sortierfahrzeugs synchronisiert ist, so dass das Sortierfahrzeug das Sortiergut unter Beibehaltung eines Restgeschwindigkeit aufnimmt. Hierdurch kann vermieden werden, dass das Sortierfahrzeug zu einem Stillstand kommt, was eine insgesamt erhöhte Effizienz beziehungsweise einen erhöhten Durchsatz des Sortiersystems ermöglichen kann.

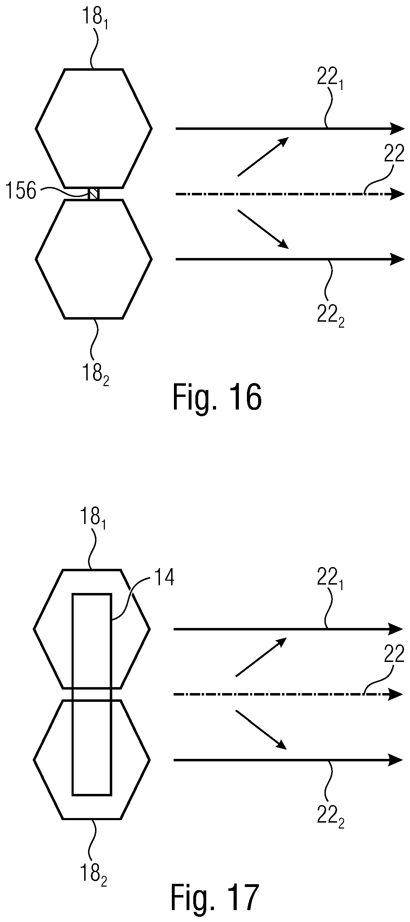

Die bisherigen Ausführungsformen beziehen sich auf einen Transport eines Sortierguts durch ein Sortierfahrzeug. Gemäß einem Ausführungsbeispiel ist jedoch auch vorgesehen, sogenanntes Sperrgut, das bedeutet, übergroße Sortiergüter und/oder besonders schwere Sortiergüter zu transportieren. Hierzu ist gemäß einem Ausführungsbeispiel vorgesehen, dass in dem Sortiersystem ein erstes Sortierfahrzeug und ein zweites Sortierfahrzeug zur wechselseitigen Kopplung ausgebildet sind, um ein gemeinsames Fahrzeug zu bilden. Dieses gemeinsame Fahrzeug kann einen gemeinsamen Transport eines Sortierguts basierend auf einer durch die Kopplung beeinflussten Trajektorie ausführen. Ein derartiges Szenario ist in der Fig. 16 dargestellt und ist in einem hierin beschriebenen Sortiersystem ohne Weiteres implementierbar. So sind beispielsweise Sortierfahrzeuge 18₁ und 18₂ mittels einer Kopplung 156 miteinander gekoppelt. Die Kopplung kann beispielsweise eine mechanische Kopplung und/oder eine magnetische Kopplung umfassen, wie es im Zusammenhang mit zu koppelnden Werkzeugen beschrieben ist. Aus einer möglicherweise für ein kleines Sortiergut bestimmten Trajektorie 22 können sich hierzu Trajektorien 22₁ und 22₂ für die Sortierfahrzeuge 18₁ und 18₂ ergeben, die beispielsweise parallel zueinander verlaufen, wobei ein Abstand auch veränderlich ist, etwa wenn das kombinatorische Fahrzeug aus den Sortierfahrzeugen 18₁ und 18₂ eine kombinatorische Rotation ausführt.

Gemäß einem Ausführungsbeispiel wird durch die Steuerungseinrichtung 24 bspw. ein Master und ein Slave zweier Fahrzeuge bestimmt, bei einer höheren Anzahl zu koppelnder Fahrzeuge bspw. eine höhere Anzahl von Slaves, was es ermöglicht, dass ein Fahrzeug, der Master, die Kontrolle über das oder die anderen Fahrzeuge übernehmen kann, etwa um an dem oder den Fahrzeugen lokal erzeugte Steuerungsbefehle zu koordinieren. Die Fahrzeuge können sich ggf. selber identifizieren, etwa durch an Seitenflächen der Fahrzeuge angeordnete Muster, wobei eine zentrale Steuerung auch diese Funktion erfüllen bzw. obsolet machen kann. Alternativ oder zusätzlich können die Sortierfahrzeuge ihre Position bestimmen, etwa unter Verwendung einer Bodenkamera und/oder einer externen Lokalisierung und können sie untereinander austauschen.

Gemäß einem Ausführungsbeispiel, das im Zusammenhang mit der Fig. 17 beschrieben ist, ist es ebenfalls möglich, dass zumindest ein erstes Sortierfahrzeug und ein zweites Sortierfahrzeug unmittelbar ungekoppelt zueinander sind aber auf voneinander abhängigen Trajektorien 22₁ und 22₂ gesteuert werden, um einen gemeinsamen Transport des Sortierguts 14 zu ermöglichen. Anders ausgedrückt können sich die Sortierfahrzeuge 18₁ und 18₂ basierend auf einer Steuerung durch das Sortiersystem 100 beziehungsweise basierend auf einer Fahrzeugsteuerung so verhalten, als wären sie mittels der Kopplung 156 gekoppelt, auch wenn eine entsprechende mechanische oder magnetische Kopplung an dieser Stelle nicht vorgesehen ist. Ungeachtet dessen kann das Sortiergut 14 zu einer mechanischen Verbindung zwischen den beiden Sortierfahrzeugen 18₁ und 18₂ führen, die jedoch nicht als mechanische Kopplung im Sinne der Kopplung 156 aus Fig. 16 zu verstehen ist.

Abhängig von einer (theoretischen) Trajektorie bezogen auf das Sortiergut kann für jedes beteiligte Fahrzeug abhängig von seinem bei der Lastaufnahme initialen Versatz zu dieser theoretischen Trajektorie mathematisch berechnet werden, welchen Geschwindigkeitsvektor das Sortierfahrzeug zu jedem Zeitpunkt während des Transportes des Sortiergutes einhalten soll. Weist das Sortierfahrzeug bspw. eine omnidirektionale Antriebseinrichtung auf, so kann dies auch umfassen, zu bestimmen, welche Ausrichtung um die Hochachse das Fahrzeug zu jedem der Zeitpunkte haben soll. Es kann also die Trajektorie des Sortierguts durch die Steuerungseinrichtung 24 bestimmt und daraus die Trajektorien der Fahrzeuge abgleitet werden und/oder aus der Trajektorie eines Fahrzeugs kann mathematisch eine Trajektorie eines anderen Fahrzeugs abgeleitet werden.

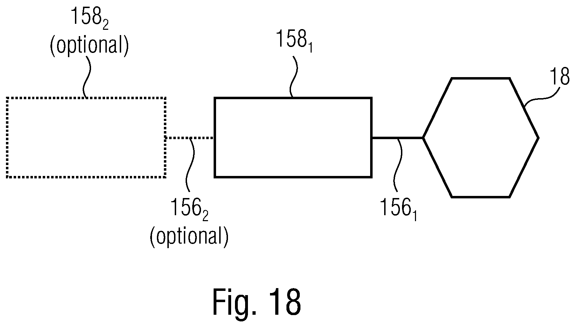

Fig. 18 zeigt ein schematisches Blockschaltbild einer Anordnung aus Sortierfahrzeug 18 und eines hiermit mittels einer Kopplung 156₁ gekoppelten Anhängers 158, der ebenfalls ein Fahrwerk aufweist, aber von dem Transportfahrzeug 18 mitgezogen wird, indem er vermittels der Kopplung 156₁ gekoppelt wird. Das Sortierfahrzeug der Fig. 18 ist zur Kopplung mit zumindest einem Anhänger ausgebildet, wobei der Anhänger 158₁ ausgebildet ist, um ein Sortiergut aufzunehmen. Optional können zumindest ein zusätzlicher Anhänger 158₂ ebenfalls gekoppelt werden, wobei in jeden der Anhänger 158₁ und/oder 158₂ zumindest ein zusätzliches Sortiergut aufgenommen werden kann. Dabei ist es zwar möglich, aber nicht erforderlich, den Anhänger ein einer bestimmten Seite, etwa einer Hinterseite, des Sortierfahrzeugs oder des anderen Anhängers zu koppeln. Vielmehr kann, insbesondere unter Verwendung einer omnidirektionalen Antriebseinheit bzw. omnidirektionalen aktiven oder passiven Fahrwerken, eine Kopplung an einer beliebigen Seite erfolgen, was auch die Möglichkeit eröffnet, mehrere Anhänger an unterschiedlichen Seiten eines Sortierfahrzeugs oder Anhängers zu koppeln. Alternativ ist es möglich, zwei benachbarte Gefährte, etwa das Sortierfahrzeug 18 und den Anhänger 158₁ und/oder den Anhänger 158₁ und den Anhänger 158₂ zur Aufnahme eines gemeinsamen Sortierguts vorzusehen.

Ein Sortiersystem gemäß einem Ausführungsbeispiel ist ausgebildet, um eine Pufferung und/oder Sequenzierung einer Mehrzahl von Sortiergütern auf einem Sortierfahrzeug und zumindest einem Anhänger oder auf zumindest zwei Anhängern zu steuern. Das Sortiersystem kann hierzu eine Reihenfolge, mit der die Sortiergüter auf der bestückten Kolonne von Ladeflächen vorliegen, an ein oder mehrere Kriterien anpassen. Hierzu können optional eines, mehrere oder alle der Sortiergüter vorab identifiziert werden, was zusätzliche Informationen, etwa über deren Destination innerhalb oder außerhalb des Sortierzentrums, Gewicht oder andere relevante Parameter, bereitstellen kann. So kann beispielsweise die Sortiergutreihenfolge, mit der Sortiergüter bei einer Durchfahrt des Sortierfahrzeugs 18 und eines oder mehrerer Anhänger 158 auf die Sequenz oder Kolonne von Ladeflächen gelegt wird, daran ausgerichtet werden, welche Destinationen die Sortiergüter in dem Sortiersystem aufweisen, was es beispielsweise ermöglicht, stets das vorderste Sortiergut abzulegen oder stets das letzte Sortiergut abzulegen, etwa indem der Anhänger abgekoppelt wird oder dergleichen. Wenn auf Anhängern sequenziert wird, kann dies beispielsweise im Bereich der Endstellen erfolgen. In diesem Fall ist eine rutschenartige Endstelle, die hierin beschrieben ist, nicht erforderlich, es kann auch eine Fläche zur Bereitstellung genügen. Die individuellen Sortiergüter kommen bei der Sortierung beispielsweise in zufälliger Reihenfolge im Bereich der Endstelle an. Im Fall von Anhängern könnten sie beispielsweise geordnet im Wesentlichen nach ihrer Ankunftsreihenfolge an der Endstelle abgestellt werden oder einsortiert in eine vorbestimmte Sequenz abgestellt werden. Die Sequenz kann dabei insbesondere die optimale Beladereihenfolge einer nachfolgenden Instanz, beispielsweise eines Paketauslieferfahrzeugs, eines Rollcontainers, eines LKW oder dergleichen darstellen, abhängig von der Ausliefertour zu den finalen Paketempfängern. Optimierungsschritte für derartige Touren können dabei in der Sequenzierung unmittelbar berücksichtigt werden. Bei der Beladung entfällt dann das manuelle Sortieren beziehungsweise bei der Auslieferung kann ein geringerer Aufwand anfallen, um das jeweils richtige Paket in dem Paketauslieferfahrzeug zu suchen. Ein Puffern, das bedeutet eine zwischenzeitliche Aufnahme von Sortiergütern, und/oder ein Sequenzieren kann dabei beispielsweise ausschließlich auf Fahrzeugen, ausschließlich auf Anhängern oder einer Kombination erfolgen.

Wie es beispielsweise anhand der Fig. 18 erläutert ist, kann die Sequenzierung von dem Sortiersystem so gesteuert werden, dass eine Mehrzahl von Sortiergütern auf einer Mehrzahl von Ladeflächen einer Ladenflächenkolonne erfolgt. Jede Ladefläche kann dabei einem Sortierfahrzeug oder einem Anhänger zugehörig sein, wobei der Anhänger unmittelbar gekoppelt mit dem Fahrzeug oder mittelbar, etwa über andere Anhänger gekoppelt, von dem Sortierfahrzeug bewegt wird. Für die Sequenzierung sind insofern mehrere Varianten denkbar. Ein Puffern und/oder Sequenzieren nur auf Sortierfahrzeugen. Hierzu können mehrere Fahrzeuge einzeln oder im Verbund angesteuert werden. Alternativ oder zusätzlich kann ein Puffern und/oder Sequenzieren ausschließlich auf Anhängern erfolgen, so dass eine Mehrzahl von Sortiergütern auf einer Mehrzahl von Anhängern erfolgt. Die Anhänger können durch ein oder mehrere Sortierfahrzeuge angeordnet beziehungsweise an der entsprechenden Stelle positioniert werden. Alternativ oder zusätzlich kann ein Puffern und/oder Sequenzieren auf Anhängern und Fahrzeugen erfolgen, so dass eine Mehrzahl von Sortiergütern auf zumindest einem Fahrzeug und zumindest einem, eventuell durch zumindest ein Sortierfahrzeug angeordneten oder positionierten, Anhänger erfolgt.

Die hierin beschriebenen Ausgestaltungen eines Sortiersystems zielen auf die Aufgabenstellung ab, eine effiziente Sortierung von mindestens einem, in der Regel aber mehreren Eingangsströmen von Stückgütern oder Sortiergütern auf mehrere, in der Regel viele Ausgangsströme zu ermöglichen. Als Hauptanwendungsfall kann beispielsweise die Sortierung von Paketsendungen, insbesondere in Paketsortierzentren betrachtet werden, die ggf. auch im Bereich des Warenausgangs von großen Distributionszentren. Ergänzend ist denkbar, dass beschriebene Sortiersysteme auch zur Sortierung von Koffern an Flughäfen einzusetzen. Ein weiterer Anwendungsfall könnte der Einsatz im Bereich der zweistufigen Kommissionierung sein. Zuvor artikelbezogen, also nicht auf konkrete Aufträge bezogene, kommissionierte Ware kann durch das Sortiersystem dann auftragsbezogen sortiert, also auf die einzelnen Aufträge verteilt werden.

Auch wenn die hierin beschriebenen Ausführungsbeispiele primär bezogen auf den Hauptanwendungsfall der Sortierung von Paketsendungen bezogen sind, sind die Anwendungen der vorliegenden Erfindung somit nicht hierauf beschränkt.

In den Ausführungsbeispielen wird dabei insbesondere auf den Kontext eines Gesamtsystems eingegangen.

Ein Sortiersystem gemäß Ausführungsbeispielen kann eine oder mehrere der Komponenten aufweisen:
- Einschleusepunkten, mind. einer oder mehrere zentrale oder dezentrale
   ∘ Einschleusepunkte müssen keine definierten Bereiche sein, es können auch ad-hoc gebildete Flächen sein, auf denen Sortiergut (insb. Paketsendungen) lose auf dem Boden (auch in Containern/Wechselbrücken etc.) liegen
      ▪ von dort optional automatische Aufnahme durch Sortierfahrzeuge vom Boden, z.B. durch Aufwälzen mittels schrägem kleinen Gurtförderer
         - entweder über zusätzliches Werkzeug, welches alle Sortierfahrzeuge haben, oder
         - bevorzugt ein wechselbares (z. B. mechanisch oder magnetisch) andockbares Werkzeug, welches sich jeweils im Bereich der Einschleusepunkte befindet und welches dort die Sortierfahrzeuge nur zur Aufnahme eines Sortiergutes nutzen und danach wieder abdocken, damit das nächste Sortierfahrzeug das Werkzeug nutzen kann
   ∘ Sortiergut kann mit Greifer eines (Knickarm-)Roboters auf das Fahrzeug gelegt werden, ggf. muss das Fahrzeug dafür noch nicht einmal komplett anhalten, weil Bewegungsbahn von Roboter und Fahrzeug synchronisiert sind; der (Knickarm-)Roboter kann dazu auch auf einem eigenen Fahrzeug angebracht sein
   ∘ passive Einschleusepunkte, von denen das Fahrzeug in der Herausfahrt das Sortiergut aufnimmt (passiv in dem Sinne, als dass für den eigentlichen Prozess der Aufnahme durch das Sortierfahrzeug an der Aufnahmestation keine Aktorik nötig ist, sondern ausschließlich die Aktorik des Fahrzeuges genutzt wird); z.B. kamm-artiger Einschleusepunkt
   ∘ prinzipiell kann Sortiergut auch von Hand auf das Sortierfahrzeug gelegt werden (im Stillstand oder während langsamer Vorbeifahrt)
- Identifikationseinrichtungen (optional): eine oder mehrere zentrale oder dezentrale, die eines oder mehrere Merkmale des Sortiergutes identifizieren (z.B. einen Barcode) und daraus ein Transportziel für die Fahrzeuge ableiten (und dieses an das Fahrzeug oder Steuerungssystem übermitteln)
   ∘ zunächst Hintergrund: Weil sich ein Identifikationsmerkmal bei einem typischerweise in etwa würfelförmigem Sortiergut (z.B. Karton) prinzipiell auf sechs verschiedenen Seiten des Sortiergutes befinden kann, werden bei klassischen Sortiersystemen sog. Scannergates eingesetzt (6-Seiten-Lesung), die das Sortiergut unabhängig von seiner Lage identifizieren können. Diese sind aufgrund der größeren Anzahl an aufwändigen (weil hohe Geschwindigkeitsanforderungen) Sensoren sehr teuer. Sie existieren daher bisher vorteilhafterweise nur einmal bzw. sehr selten je Sortiersystem nahe der (bisher immer zentralen) Einschleusung.
   ∘ Fahrzeugbasierte Sortiersysteme gemäß Ausführungsbeispielen ermöglichen jedoch auch dezentrale Einschleusungen. Um in Ausführungsbeispielen eine kostengünstige automatische Identifikation zu ermöglichen, reichen ein bis zwei Sensoren aus. Dazu fährt das Fahrzeug bspw. mit dem Sortiergut an dem Sensor vorbei, welcher schräg auf das Sortiergut "blickend" ausgerichtet ist und somit immer mind. zwei Seiten des Sortierguts scannen kann. Ist das Sortiergut nicht zu identifizieren, dreht sich das Fahrzeug solange, bis das Sortiergut identifiziert wurde. Hat sich das Fahrzeug einmal um 360° gedreht und die Identifikation war nicht erfolgreich, lag das Identifikationsmerkmal auf der aktuellen Unterseite des Sortierguts. Dazu sind mehrere Varianten denkbar:
      ▪ die Unterseite wird durch einen zweiten Sensor bereits vor der Lastaufnahme am Einschleusepunkt geprüft
      ▪ das Fahrzeug gibt das Sortiergut auf eine Kippeinrichtung ab, von der es anschließend wieder aufnimmt / zurückgelegt bekommt, wobei das Sortiergut anschließend auf einer anderen Seite als zuvor auf dem Fahrzeug aufliegt. Anschließend wird erneut an dem einen stationären Sensor vorbeigefahren und ggf. gedreht. Das Identifikationsmerkmal sollte nun gelesen werden. Ansonsten liegt ein Fehler vor und das Sortiergut ist an einen separaten manuellen Clearingplatz zu bringen.
      ▪ das Fahrzeug verfügt über einen eigenen Sensor, der ein unten am Sortiergut befindliches Identifikationsmerkmal erkennen kann
   ∘ Ggf. kann diese (oder auch eine separate) Sensorik auch genutzt werden, um die Ausrichtung des Sortierguts auf dem Fahrzeug zu prüfen. Ist diese nicht optimal / transportsicher, kann das Steuerungssystem oder die auf dem Fahrzeug befindliche Steuerung durch eine gezielte ruckartige Bewegung der Antriebsmotoren eine Korrektur der Lage des Sortierguts auf dem Fahrzeug durchführen.
   ∘ die Identifikationseinrichtung kann auch beweglich auf einem Fahrzeug angebracht sein und kann an verschiedenen Einsatzorten / Endstellen eingesetzt werden
- Sortierfahrzeugen, mehrere automatisch fahrende
   ∘ Sortierfahrzeuge können sich um ihren Mittelpunkt drehen (mittiger Differentialkinematik), alternativ und bevorzugt aber sogar mit flächenbeweglichem Fahrwerk
   ∘ Sortierfahrzeuge verfügen über eine Lastaufnahme- und Lastabgabevorrichtung
      ▪ Lastabgabe automatisch ohne zusätzlichen Motor, Bewegung der Last initiiert durch Fahrbewegung des Fahrzeuges → kinetische Energie zur Lastabgabe resultiert aus den Fahrmotoren (Fahrzeug kann relativ schnell fahren)
         - Abgabe durch Massenträgheit, Fahren an einen Bumper (gepolsterter oder gefederter Anschlag) oder durch starkes Abbremsen; alternativ oder zusätzlich: Ladungssicherung und -entsicherung durch Reibungsänderung der Auflagefläche
         - Lastabgabe mit Klappschale, wobei die Kraft zum Klappen bei der Lastabgabe auch aus der Fahrbewegung resultiert
      ▪ Lastaufnahme von statischer Last (also ohne die Notwendigkeit einer synchronisierten Bewegung) automatisch durch das Sortierfahrzeug ohne zusätzlichen Motor möglich (Prinzip Kamm-Lastaufnahmemittel, also ein kamm-artiger Aufsatz auf dem Fahrzeug, auf dem die aufgenommene Last steht, oder ähnlich)
   ∘ Sortierfahrzeug kann sich bei Kurvenfahrt so steuern / drehen, dass ein seitliches Herunterfallen der Last in Kurven verhindert wird
   ∘ Sortierfahrzeuge können sich aneinander koppeln und auch passive Anhänger an- und abkoppeln
   ∘ mehrere Sortierfahrzeuge können zusammen größeres Sortiergut transportieren, ohne physisch miteinander gekoppelt zu sein; so kann auch großes/unförmiges sog. Sperrgut transportiert werden, das nicht auf ein einzelnes Fahrzeug passt (in klassischen automatischen Sortierzentren ist die Sortierung von Sperrgut ausnahmslos ein aufwändiger manueller Sonderprozess); im Stand der Technik der fahrzeugbasierten Sortiersysteme ist kein automatischer Transport von Sperrgut bekannt
   ∘ optional haben Sortierfahrzeug eine Informationseinrichtung, etwa ein Display und/oder eine akustische Ausgabe, die dem Sortiergüter aufgebenden/abnehmendem Menschen eine Zusatzinformation zum Sortiergut übermitteln; diese kann z.B. die Position des Sortiergutes (insb. der Paketsendung) in der Sequenz der Auslieferfahrt sein, wodurch eine routenoptimale Sortierung im Auslieferfahrzeug möglich ist; diese Zusatzinformation kann z.B. aber auch sein, in welchen/s von mehreren bereitstehenden Rollwagen / ULD (insb. bei Gepäck) das Sortiergut durch den Menschen abzulegen ist. Das bedeutet, dass zumindest ein Sortierfahrzeug eine Informationsschnittstelle aufweisen kann, um eine mit dem Sortiergut assoziierte Information auszugeben.
   ∘ Das Fahrzeug kann als Lokalisierungsverfahren eine Bodenkamera verwenden. Alternativ oder zusätzlich sind aber auch andere Verfahren (z.B. SLAM oder externe Lokalisierung mittels Kameras) denkbar.
   ∘ Das Fahrzeug kann eine Anti-Schlupf-Regelung verwenden.
- Endstellen, mehrere
   ∘ Endstellen können statt durch einfache installierte Infrastruktur (Rutschen etc.) auch definiert sein durch wechselnde Objekte (Auslieferfahrzeuge, Wechselbrücken, ULD (Unit Load Device, insb. für Koffer) und auch wechselnde Positionen an prinzipiell beliebigen Positionen im Layout (insb. Rollwagen), ohne dass wie im Stand der Technik Infrastruktur nötig ist
   ∘ können passive Rutschen sein, mit ebenen oder geneigt abfallenden Flächen; haben dann auch eine Pufferfunktion
      ▪ Abgabe durch Trägheit (siehe Beschreibung Sortierfahrzeug)
   ∘ können kamm-artige Abgabepunkte sein
      ▪ auf die das Sortierfahrzeug in der Hereinfahrt (ggf. auch, aber nicht zwingend, in der Durchfahrt) das Sortiergut abgibt / abstreift
   ∘ Abnahme durch (ggf. mobilen) Roboter mit Greifer, der das Sortiergut in Auslieferfahrzeug, ULD, Regal, Wechselbrücke, Rollbehälter oder sonstigen Puffer ablegt
   ∘ Abnahme vom Sortierfahrzeug möglicherweise durch einen Menschen (ggf. inkl. Anzeige von Zusatzinformationen, siehe Sortierfahrzeug)
- Steuerungslogik (zentral oder dezentral)
   ∘ Koordination der Auftragszuweisung (ggf. Verhandlung)
   ∘ Koordination der Fahrwege (schnellster/kürzester Weg vs. Kollisionen), insb. bei der Fahrt ohne feste Routen auf vorzugweise direkten Wegen
   ∘ System kann Pufferung und Sequenzierung von Anhängern steuern
   ∘ Layout sehr variabel, Lage von Einschleusungen, Endstellen und Identifikationseinrichtungen kann beliebig angepasst werden, Anzahl der Fahrzeuge ebenfalls; Steuerungslogik berücksichtigt dies

Bei dem erwähnten Sortiersystem, bei dem zumindest ein fahrerloses Sortierfahrzeug 18 eine Informationsschnittstelle aufweist, um eine mit dem Sortiergut 14 assoziierte Information auszugeben, kann das Sortierfahrzeug eingerichtet sein, um Parameter des Ladeguts zu erfassen, etwa durch Sensorik und/oder eingerichtete Werkzeuge, und im zentralen Verwaltungssystem der Ladungsträgerinformationen zu ergänzen. Beispielsweise kann das Sortierfahrzeug das Gewicht des Ladeguts messen und/oder mit einer Identifizierungseinheit Barcode und/oder Dimensionen erkennen.

Aufgrund des Einsatzes von Fahrzeugen als Sortiermittel ist ein fahrzeugbasiertes Sortiersystem in Bezug auf den Durchsatz wesentlich skalierbarer als herkömmliche fest installierte Sortiersysteme. Weil im Bereich der Einschleusung und Vereinzelung gar keine (bei manueller Aufgabe des Sortiergutes auf die Fahrzeuge) oder nur sehr wenig Technik erforderlich ist, kann die Einschleusung auch an mehreren dezentralen Orten erfolgen. Dies führt zu dem Vorteil, dass Fahrzeuge kurz nach der Abgabe an einer Endstelle eine wesentlich kürzere Leerfahrt haben, als wenn sie (wie die z.B. Klappschalen eines herkömmlichen Sorters) wieder zu einer zentralen Einschleusung fahren müssten. Jedoch selbst im Falle einer zentralen Einschleusung in einem fahrzeugbasierten Sortiersystem kann ein Fahrzeug direkt nach der Abgabe zurück in Richtung der Einschleusung fahren, während die (z.B.) Klappschale zunächst die gesamte Runde auf einem Ringsorter fahren muss.

Das Lastaufnahmemittel der Sortierfahrzeuge benötigt im Vergleich zum Stand der Technik bei der Sortierung mit Fahrzeugen nicht zwingend einen separaten Motor. Zudem ist (in einigen Varianten) die Lastaufnahme ohne ein Anhalten des Fahrzeuges möglich. Auch die Lastabgabe kann ohne Anhalten (Kamm-artig) oder bei hoher Geschwindigkeit (Abgabe mit Trägheit) erfolgen.

Im Idealfall benötigt das Sortiersystem nur einen leeren Raum, also ein prinzipiell beliebig geformtes Gebäude mit ebenem Boden (sinnvollerweise befinden sich an den Außenwänden Laderampen für LKW, Wechselbrücken, Auslieferfahrzeuge etc.). Die Vereinzelung und Einschleusung von ankommenden Paketsendungen erfolgt durch andockbare Werkzeuge, mobile Knickarmroboter oder manuell. Anschließend erfolgt die Identifikation der nun auf dem Sortierfahrzeug liegenden Paketsendungen mit einer z.B. auf einem anderen Fahrzeug angebrachten Identifikationseinrichtung. Nach der Fahrt zum Sortierziel befindet sich an der Endstelle entweder ein Roboter oder ein Mensch, der das Paket abnimmt und in einen Rollwagen ablegt. In diesem Idealfall ist keinerlei fest installierte Infrastruktur nötig (ggf. nur Kommunikationsinfrastruktur).

Aber auch in einem technisch weniger anspruchsvollen Fall der Lastaufnahme an der Einschleusung sind nur sehr einfache und platzsparende kamm-artige Gestelle nötig, von denen die Sortierfahrzeuge die Paketsendungen aufnehmen. Diese müssen nicht mit dem Hallenboden verschraubt werden. Ähnliches gilt für die Lastabgabe an den Endstellen. Hier sind entweder ebenfalls einfache Gestelle denkbar, auf welche die Fahrzeuge abgeben, oder, sofern die Endstelle puffern muss, einfache schiefe Ebenen (Bleche, Röllchen), auf die das Fahrzeug, bevorzugt ohne Berührung der Endstelle, die Paketsendung abwirft. Auch in diesem Fall ist nur sehr wenig Infrastruktur erforderlich. Diese kann zudem sehr schnell auf- und abgebaut werden.

Insgesamt ist ein solches Sortiersystem also sehr flexibel, weil Durchsatz, Anzahl Einschleusungen und Anzahl Endstellen skalierbar sind und es äußerst wandelbar ist (schneller Auf-/Um-/Abbau bzw. Umzug).

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sortiersystem, umfassend:
einer ersten Anzahl von Einschleusepunkten (12), die eingerichtet sind, um Sortiergüter (14) bereitzustellen;
einer zweiten Anzahl von Endstellen (16), die ausgebildet sind, um die Sortiergüter (14) zu empfangen;
einer dritten Anzahl von fahrerlosen Sortierfahrzeugen (18), die ausgebildet sind, um die Sortiergüter (14) zwischen der ersten Anzahl von Einschleusepunkten (12) und der zweiten Anzahl von Endstellen (16) zu transportieren; und
einer Steuerungseinrichtung (24), die ausgebildet ist, um die fahrerlosen Sortierfahrzeuge (18) zwischen der ersten Anzahl von Einschleusepunkten (12) und der zweiten Anzahl von Endstellen (16) zu steuern;
wobei zumindest ein fahrerloses Sortierfahrzeug (18) ausgebildet ist, um basierend auf einer Veränderung eines Vektors der Geschwindigkeit des fahrerlosen Sortierfahrzeugs das Sortiergut (14) unter Verwendung einer durch eine Fahrtbewegung des fahrerlosen Sortierfahrzeugs bereitgestellten kinetischen Energie des Sortierguts (14) abzugeben.

2. Sortiersystem gemäß Anspruch 1, bei dem das fahrerlose Sortierahrzeugs ausgebildet ist, um für eine Abgabe des Sortierguts (14) an eine Endstelle (16) ein Abbremsen basierend auf einer Ansteuerung der Steuerungseinrichtung und/oder durch einen Aufprall des fahrerlosen Sortierfahrzeugs und/oder basierend auf einer gezielten Kurvenfahrt die Veränderung des Vektors der Geschwindigkeit zu erhalten, und um unter Einwirkung der kinetischen Energie eine Relativbewegung des Sortierguts (14) bezüglich des fahrerlosen Sortierfahrzeugs zu erzeugen.

3. Sortiersystem gemäß Anspruch 2, bei dem bei dem das fahrerlose Sortierfahrzeug (18) ein omnidirektionales Antriebssystem aufweist und ausgebildet ist, um die Veränderung des Vektors der Geschwindigkeit basierend auf einer Ansteuerung des omnidirektionalen Antriebssystems zu erhalten.

4. Sortiersystem gemäß einem der vorangehenden Ansprüche, bei dem das fahrerlose Sortierfahrzeug eine Antriebseinrichtung und eine Steuerungseinrichtung zur Steuerung der Antriebseinrichtung aufweist; wobei die Steuerungseinrichtung ausgebildet ist, um für eine Abgabe des Sortierguts (14) an eine Endstelle (16) die Antriebseinrichtung für ein Abbremsen des fahrerlosen Sortierfahrzeugs vor einem Erreichen der Endstelle (16) anzusteuern, um durch das Abbremsen unter Einwirkung der kinetischen Energie eine Relativbewegung des Sortierguts (14) bezüglich des fahrerlosen Sortierfahrzeugs zu erzeugen; um vermittels der Relativbewegung die Abgabe an die Endstelle (16) zu bewirken.

5. Sortiersystem gemäß einem der vorangehenden Ansprüche, bei dem das fahrerlose Sortierfahrzeug eine Antriebseinrichtung und eine Steuerungseinrichtung zur Steuerung der Antriebseinrichtung aufweist; wobei die Steuerungseinrichtung ausgebildet ist, um für eine Abgabe des Sortierguts (14) an eine Endstelle (16) die Antriebseinrichtung für einen Aufprall des fahrerlosen Sortierfahrzeugs an einen Kontaktbereich der Endstelle (16) anzusteuern, um durch des Aufpralls unter Einwirkung der kinetischen Energie eine Relativbewegung des Sortierguts (14) bezüglich des fahrerlosen Sortierfahrzeugs zu erzeugen; um vermittels der Relativbewegung die Abgabe an die Endstelle (16) zu bewirken.

6. Sortiersystem gemäß einem der vorangehenden Ansprüche, bei dem das fahrerlose Sortierfahrzeug (18) eine Sortiergutaufnahme zum Transportieren des Sortierguts (14) und zur Übergabe des Sortierguts (14) auf eine Sortiergutübernahmestation aufweist, wobei die Sortiergutaufnahme auf einem Fahrgestell mit Fahrwerk angeordnet ist, wobei das Fahrwerk mit einer Antriebseinrichtung gekoppelt ist; und weiterhin eine Steuerungseinrichtung als Fahrzeugsteuerung vorgesehen ist, und die Sortiergutaufnahme um eine Kippachse kippbar am Fahrgestell angelenkt und wenigstens an einem Abgaberand offen oder öffenbar ausgebildet ist, wobei die Kippachse und der Abgaberand so zueinander angeordnet sind, dass in gekippter Lage das Sortiergut (14) über den Abgaberand auf die Sortiergutübernahmestation übergebbar ist, wobei zur Übergabe des Sortierguts (14) auf die Sortiergutübernahmestation die Sortiergutaufnahme durch ein durch eine Veränderung eines Vektors der Geschwindigkeit des fahrerlosen Sortierfahrzeuges und/oder durch eine Federbeaufschlagung der Sortiergutaufnahme erzeugtes Drehmoment um die Kippachse gekippt wird.

7. Sortiersystem gemäß einem der vorangehenden Ansprüche, wobei zumindest ein fahrerloses Sortierfahrzeug (18) der dritten Anzahl von fahrerlosen Sortierfahrzeugen (18) eine Schnittstelle (148) umfasst, die ausgebildet ist, um unterschiedliche Werkzeuge basierend auf einer Kopplung aufzunehmen.

8. Sortiersystem gemäß einem der vorangehenden Ansprüche, bei dem eine Steuerung und/oder Drehung des Fahrzeugs während einer Kurvenfahrt gesteuert wird, um einem Herunterfallen des Sortierguts (14) von dem Fahrzeug entgegenzuwirken.

9. Verfahren zum Steuern eines Sortiersystems, mit folgenden Schritten:
Steuern von fahrerlosen Sortierfahrzeugen (18) zwischen einer ersten Anzahl von Einschleusepunkten (12) und einer zweiten Anzahl von Endstellen (16); um an der ersten Anzahl von Einschleusepunkten (12) Sortiergüter (14) bereitzustellen; an der zweiten Anzahl von Endstellen (16) die Sortiergüter (14) zu empfangen; indem mit einer dritten Anzahl von fahrerlosen Sortierfahrzeugen (18) die Sortiergüter (14) zwischen der ersten Anzahl von Einschleusepunkten (12) und der zweiten Anzahl von Endstellen (16) transportiert werden;
so dass zumindest ein fahrerloses Sortierfahrzeug basierend auf einer Veränderung eines Vektors der Geschwindigkeit des fahrerlosen Sortierfahrzeugs das Sortiergut (14) unter Verwendung einer durch eine Fahrtbewegung des fahrerlosen Sortierfahrzeugs bereitgestellten kinetischen Energie des Sortierguts (14) abgibt.

10. Computerprogramm mit einem Programmcode zur Durchführung des Verfahrens nach Anspruch 9, wenn das Programm auf einem Computer läuft.

## Claims

1. A sorting system comprising:
a first number of insertion points (12) configured to provide sorting goods (14);
a second number of terminal points (16) configured to receive the sorting goods (14);
a third number of driverless sorting vehicles (18) configured to transport the sorting goods (14) between the first number of insertion points (12) and the second number of terminal points (16); and
a control device (24) configured to control the driverless sorting vehicles (18) between the first number of insertion points (12) and the second number of terminal points (16);
wherein at least one driverless sorting vehicle (18) is configured to discharge the sorting good (14) using kinetic energy of the sorting good (14) provided by a travel motion of the driverless sorting vehicle, based on a change of a speed vector of the driverless sorting vehicle.

2. The sorting system according to claim 1, wherein the driverless sorting vehicle is configured to obtain, for discharge of the sorting good (14) at a terminal point (16), braking based on a control of the control device and/or by an impact of the driverless sorting vehicle, and/or the change of the speed vector based on taking a specific turn, and to generate a relative movement of the sorting good (14) relative to the driverless sorting vehicle under the influence of the kinetic energy.

3. The sorting system according to claim 2, wherein the driverless sorting vehicle (18) comprises an omnidirectional drive system and is configured to obtain the change of the speed vector based on a control of the omnidirectional drive system.

4. The sorting system according to one of the preceding claims, wherein the driverless sorting vehicle comprises a drive device and a control device for controlling the drive device; wherein the control device is configured to control the drive device for braking the driverless sorting vehicle before reaching the terminal point (16) for discharge of the sorting good (14) to a terminal point (16), in order to generate a relative movement of the sorting good (14) relative to the driverless sorting vehicle as a result of the braking under the influence of the kinetic energy; in order to effect discharge to the terminal point (16) by means of the relative movement.

5. The sorting system according to one of the preceding claims, wherein the driverless sorting vehicle comprises a drive device and a control device for controlling the drive device; wherein the control device is configured to control the drive device for an impact of the driverless sorting vehicle against a contact area of the terminal point (16) for discharge of the sorting good (14) to a terminal point (16), in order to generate a relative movement of the sorting good (14) relative to the driverless sorting vehicle as a result of the impact under the influence of the kinetic energy; in order to effect discharge to the terminal point (16) by means of the relative movement.

6. The sorting system according to one of the preceding claims, wherein the driverless sorting vehicle (18) comprises a sorting good receptacle for transporting the sorting good (14) and for transferring the sorting good (14) to a sorting good transfer station, the sorting good receptacle being arranged on a chassis with running gear, the running gear being coupled to a drive device; and furthermore a control device is provided as a vehicle controller, and the sorting good receptacle is articulated to the chassis so as to be tiltable about a tilting axis and is configured so as to be open or openable at least at a discharge edge, the tilting axis and the discharge edge being arranged relative to each other such that, in the tilted positioning, the sorting good (14) can be transferred to the sorting good transfer station via the discharge edge, wherein, in order to transfer the sorting good (14) to the sorting good transfer station, the sorting good receptacle is tilted about the tilting axis by a torque generated by a change in a vector of the speed of the driverless sorting vehicle and/or by spring loading of the sorting good receptacle.

7. The sorting system according to one of the preceding claims, wherein at least one driverless sorting vehicle (18) of the third number of driverless sorting vehicles (18) comprises an interface (148) configured to receive different tools based on a coupling.

8. The sorting system according to one of the preceding claims, wherein control and/or rotation of the vehicle is controlled during a turn to counteract the sorting good (14) from falling off the vehicle.

9. A method for controlling a sorting system, comprising the following steps:
controlling driverless sorting vehicles (18) between a first number of insertion points (12) and a second number of terminal points (16); to provide sorting goods (14) at the first number of insertion points (12); to receive the sorting goods (14) at the second number of terminal points (16); by transporting the sorting goods (14) between the first number of insertion points (12) and the second number of terminal points (16) by a third number of driverless sorting vehicles (18);
so that at least one driverless sorting vehicle discharges the sorting good (14) using a kinetic energy of the sorting good (14) provided by a travel motion of the driverless sorting vehicle, based on a change of a speed vector of the driverless sorting vehicle.

10. A computer program comprising program code for performing the method of claim 9, when the program runs on a computer.

## Revendications

1. Système de tri, comprenant :
un premier nombre de points d'introduction (12) qui sont agencés pour fournir des produits à trier (14) ;
un deuxième nombre de points d'extrémité (16) qui sont conçus pour recevoir les produits à trier (14) ;
un troisième nombre de véhicules de tri sans conducteur (18) qui sont conçus pour transporter les produits à trier (14) entre le premier nombre de points d'introduction (12) et le deuxième nombre de points d'extrémité (16) ; et
un moyen de commande (24) qui est conçu pour commander les véhicules de tri sans conducteur (18) entre le premier nombre de points d'introduction (12) et le deuxième nombre de points d'extrémité (16) ;
dans lequel au moins un véhicule de tri sans conducteur (18) est conçu pour livrer le produit à trier (14) sur la base d'une modification d'un vecteur de la vitesse du véhicule de tri sans conducteur en utilisant une énergie cinétique du produit à trier (14) fournie par un mouvement de déplacement du véhicule de tri sans conducteur.

2. Système de tri selon la revendication 1, dans lequel, lors de la livraison du produit à trier (14) au niveau d'un point d'extrémité (16), le véhicule de tri sans conducteur est conçu pour produire un freinage sur la base d'une activation du moyen de commande et/ou par le biais d'un impact du véhicule de tri sans conducteur et/ou pour obtenir sur la base d'un virage ciblé la modification du vecteur de la vitesse, et par le biais de l'influence de l'énergie cinétique pour produire un mouvement relatif du produit à trier (14) relatif au véhicule de tri sans conducteur.

3. Système de tri selon la revendication 2, dans lequel le véhicule de tri sans conducteur (18) présente un système d'entraînement omnidirectionnel et est conçu pour obtenir la modification du vecteur de la vitesse sur la base d'une activation du système d'entraînement omnidirectionnel.

4. Système de tri selon une des revendications précédentes, dans lequel le véhicule de tri sans conducteur présente un moyen d'entraînement et un moyen de commande pour commander le moyen d'entraînement ; dans lequel, lors d'une livraison du produit à trier (14) au niveau d'un point d'extrémité (16), le moyen de commande est conçu pour actionner le moyen d'entraînement afin de freiner le véhicule de tri sans conducteur avant d'atteindre le point d'extrémité (16) afin de, grâce au freinage par le biais de l'influence de l'énergie cinétique, produire un mouvement relatif du produit à trier (14) relatif au véhicule de tri sans conducteur ; afin de, par l'intermédiaire du mouvement relatif, provoquer la livraison au niveau du point d'extrémité (16).

5. Système de tri selon une des revendications précédentes, dans lequel le véhicule de tri sans conducteur présente un moyen d'entraînement et un moyen de commande pour commander le moyen d'entraînement ; dans lequel le moyen de commande est conçu, los d'une livraison du produit à trier (14) au niveau d'un point d'extrémité (16), pour actionner le moyen d'entraînement pour que le véhicule de tri sans conducteur forme un impact au niveau d'une zone de contact du point d'extrémité (16) afin de, grâce à l'impact par le biais de l'influence de l'énergie cinétique, produire un mouvement relatif du produit à trier (14) relatif au véhicule de tri sans conducteur, afin de, par l'intermédiaire du mouvement relatif, provoquer la livraison au niveau du point d'extrémité (16).

6. Système de tri selon une des revendications précédentes, dans lequel le véhicule de tri sans conducteur (18) présente une réception de produit à trier pour transporter le produit à trier (14) et pour transférer le produit à trier (14) sur une station de prise en charge de produit à trier, dans lequel la réception de produit à trier est disposée sur un châssis avec un train de roulement, dans lequel le train de roulement est couplé à un moyen d'entraînement ; et en outre un moyen de commande est prévu pour servir de commande de véhicule et la réception de produit à trier est articulée de manière à pouvoir basculer autour d'un axe de basculement au niveau du châssis et est conçue de manière ouverte ou pouvant être ouverte au moins au niveau d'un bord de livraison, dans lequel l'axe de basculement et le bord de livraison sont disposés l'un par rapport à l'autre de telle sorte que, dans la position basculée le produit à trier (14) peut être transféré, par le biais du bord de livraison, sur la station de prise en charge de produit à trier, dans lequel, pour transférer le produit à trier (14) sur la station de prise en charge de produit à trier, la réception de produit à trier est basculée autour de l'axe de basculement par un couple produit par une modification d'un vecteur de la vitesse du véhicule de tri sans conducteur et/ou par une sollicitation par ressort de la réception de produit à trier.

7. Système de tri selon une des revendications précédentes, dans lequel au moins un véhicule de tri sans conducteur (18) du troisième nombre de véhicules de tri sans conducteur (18) présente une interface (148) qui est conçue pour recevoir différents outils sur la base d'un accouplement.

8. Système de tri selon une des revendications précédentes, dans lequel une commande et/ou une rotation du véhicule pendant un virage est commandée pour contrecarrer une chute du produit à trier (14) du véhicule.

9. Procédé destiné à commander un système de tri, comprenant les étapes suivantes :
commander des véhicules de tri sans conducteur (18) entre un premier nombre de points d'introduction (12) et un deuxième nombre de points d'extrémité (16) ; pour fournir des produits à trier (14) au niveau du premier nombre de points d'introduction (12) ; pour recevoir les produits à trier (14) au niveau du deuxième nombre de points d'extrémité (16) ; en transportant les produits à trier (14) avec un troisième nombre de véhicules de tri sans conducteur (18) entre le premier nombre de points d'introduction (12) et le deuxième nombre de points d'extrémité (16) ;
de telle sorte qu'au moins un véhicule de tri sans conducteur livre le produit à trier (14) sur la base d'une modification d'un vecteur de la vitesse du véhicule de tri sans conducteur en utilisant une énergie cinétique du produit à trier (14) fournie par un mouvement de déplacement du véhicule de tri sans conducteur.

10. Programme d'ordinateur avec un code de programme pour réaliser le procédé selon la revendication 9 lorsque le programme est exécuté sur un ordinateur.
